(19) Europäisches Patentamt European Patent Office Office européen des brevets

(11) **EP 4 550 222 B1**

(12) **EUROPEAN PATENT SPECIFICATION**

(45) Date of publication and mention of the grant of the patent:
**20.05.2026 Bulletin 2026/21**

(21) Application number: **22949347.3**

(22) Date of filing: **29.06.2022**

(51) International Patent Classification (IPC):
**G06N 10/20** *(2022.01)*      **G06N 10/80** *(2022.01)*
**G06N 10/70** *(2022.01)*      G06N 10/40 *(2022.01)*

(52) Cooperative Patent Classification (CPC):
**G06N 10/20; G06N 10/70; G06N 10/80;**
G06N 10/40

(86) International application number:
**PCT/JP2022/025903**

(87) International publication number:
**WO 2024/004072 (04.01.2024 Gazette 2024/01)**

(54) **QUANTUM CIRCUIT DESIGN PROGRAM, QUANTUM CIRCUIT DESIGN METHOD, AND QUANTUM CIRCUIT DESIGN DEVICE**

QUANTENSCHALTUNGSENTWURFSPROGRAMM, QUANTENSCHALTUNGSENTWURFSVERFAHREN UND QUANTENSCHALTUNGSENTWURFSVORRICHTUNG

PROGRAMME DE CONCEPTION DE CIRCUIT QUANTIQUE, PROCÉDÉ DE CONCEPTION DE CIRCUIT QUANTIQUE, ET DISPOSITIF DE CONCEPTION DE CIRCUIT QUANTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.05.2025 Bulletin 2025/19**

(73) Proprietor: **FUJITSU LIMITED**
**Kawasaki-shi, Kanagawa 211-8588 (JP)**

(72) Inventors:
• **ISHII, Masatoshi**
  **Kawasaki-shi, Kanagawa 211-8588 (JP)**
• **OSHIMA, Hirotaka**
  **Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(56) References cited:
**JP-A- 2021 536 629      US-B1- 11 112 842**

• **THOMAS J MALDONADO ET AL: "Error rate reduction of single-qubit gates via noise-aware decomposition into native gates", ARXIV.ORG, CORNELL UNIVERSITY LIBRARY, 201 OLIN LIBRARY CORNELL UNIVERSITY ITHACA, NY 14853, 5 May 2022 (2022-05-05), XP091213838, DOI: 10.1038/S41598-022-10339-0**
• **DELFOSSE NICOLAS ET AL: "Toward a Union-Find Decoder for Quantum LDPC Codes", vol. 68, no. 5, 14 March 2021 (2021-03-14), USA, pages 1 - 28, XP093287722, ISSN: 0018-9448, Retrieved from the Internet <URL:https://arxiv.org/pdf/2103.08049> [retrieved on 20250617], DOI: 10.1109/TIT.2022.3143452**
• **TOSHINARI ITOKO; RUDY RAYMOND; TAKASHI IMAMICHI; ATSUSHI MATSUO: "Optimization of Quantum Circuit Mapping using Gate Transformation and Commutation", ARXIV.ORG, 18 October 2019 (2019-10-18), XP081500667**

**Description**

FIELD

The present invention relates to a quantum circuit design program, a quantum circuit design method, and a quantum circuit design device.

BACKGROUND

Currently, an available quantum computer is a type called a noisy intermediate-scale quantum computer (NISQ) using qubits of a superconducting system or an ion trap system. These quantum devices have an error rate of about 1% and the number of qubits of about 10 to 1000. It is not possible for such a small quantum computer to completely correct errors. Therefore, when quantum calculation is performed on the quantum computer, it is important to perform quantum calculation with a quantum circuit for reducing errors as possible.

Furthermore, in the quantum computer, as a quantum gate for operating a qubit, a one-qubit gate and a two-qubit gate are mounted. These quantum gates are called native gates. Which quantum gate of the two-qubit gate is supported as the native gate depends on a system of a quantum device adopted in the quantum computer.

On the other hand, a quantum circuit created in response to a problem to be solved may include a quantum gate other than the native gate. Therefore, the quantum gate other than the native gate is converted into an equivalent circuit obtained by combining the native gates, and then, is mounted on a qubit control device that performs a gate operation of the qubit. For example, a three-qubit gate such as a CCX (Toffoli) gate is implemented using the plurality of two-qubit gates. A CnX gate or a CnZ gate (n is integer equal to or more than three) having three or more control bits is converted into the plurality of CCX gates, and then, converted into the native gate.

As a technique related to improvement in processing executed by the quantum computer, for example, a constant folding method in compilation of a quantum algorithm has been proposed. Furthermore, a method for designing a quantum computing circuit specific for an application or an algorithm for a specific application or algorithm has been proposed. Moreover, a technique has been proposed for reusing a single physical qubit by an active reset operation, if use times do not overlap, in a case where a quantum algorithm uses a logical qubit only for a short time.

THOMAS J MALDONADO ET AL: "Error rate reduction of single-qubit gates via noise-aware decomposition into native gates",ARXIV.ORG, CORNELL UNIVERSITY LIBRARY, 201 OLIN LIBRARY CORNELL UNIVERSITY ITHACA, NY 14853, 5 May 2022 (2022-05-05), DOI: 10.1038/S41598-022-10339-0 discloses an approach by which knowledge of a qubit's initial quantum state and the standard parameters describing its decoherence can be leveraged to mitigate the noise present during the execution of a single-qubit gate.

SUMMARY

TECHNICAL PROBLEM

When a quantum gate that is not supported by a quantum device of a quantum computer is converted into an equivalent circuit including a native gate, a plurality of equivalent circuits that can serve as conversion destinations exists in some cases. In this case, it is desirable to perform conversion into an equivalent circuit with a smaller error rate of quantum calculation from among the plurality of equivalent circuits.

The error rate of the equivalent circuit depends on characteristics of a qubit used for the equivalent circuit. However, typically, conversion into an equivalent circuit in consideration of the characteristics of the qubit is not performed. Therefore, a quantum gate to be converted is mechanically converted into an equivalent circuit that is associated with the quantum gate in advance, and there is a possibility that the error rate of the quantum calculation increases. When the error rate of the quantum calculation increases, this deteriorates calculation accuracy.

In one aspect, an object of this case is to improve accuracy of quantum calculation.

SOLUTION TO PROBLEM

The present invention is defined by the independent claims, to which reference should now be made. Specific embodiments are defined in the dependent claims.

ADVANTAGEOUS EFFECTS OF INVENTION

According to one mode, it is possible to improve accuracy of quantum calculation.

The object described above and other objects, features, and advantages of the present invention will become clear from the following description related to the appended drawings, which represent preferred embodiments as examples of the present invention.

BRIEF DESCRIPTION OF DRAWINGS

FIG. 1 is a diagram illustrating an example of a quantum circuit design method.
FIG. 2 is a diagram illustrating an example of a system configuration.
FIG. 3 is a diagram illustrating a configuration example of hardware of a control computer.
FIG. 4 is a diagram illustrating an example of an equivalent circuit of a CCX gate.
FIG. 5 is a diagram illustrating an example of an equivalent circuit of a CCZ gate.
FIG. 6 is a diagram illustrating an example of an optimized equivalent circuit of a CCZ gate.
FIG. 7 is a diagram illustrating an example of a mountable equivalent circuit of the CCZ gate.
FIG. 8 is a diagram illustrating an example of an equivalent circuit of a CX gate using an iSWAP gate.
FIG. 9 is a block diagram illustrating an example of functions of the control computer.
FIG. 10 is a diagram illustrating an example of conversion information.
FIG. 11 is a diagram illustrating an example of connection topology information.
FIG. 12 is a diagram illustrating an example of qubit characteristic information.
FIG. 13 is a flowchart illustrating an example of a procedure of qubit characteristic information update processing.
FIG. 14 is a diagram illustrating an example of CCX gate conversion processing.
FIG. 15 is a flowchart illustrating an example of a procedure of quantum circuit conversion processing.
FIG. 16 is a diagram illustrating an example of a change in a TVD for each equivalent circuit according to noise.
FIG. 17 is a diagram illustrating an example of a quantum circuit of a three-qubit Grover's algorithm.
FIG. 18 is a diagram illustrating an example of an equivalent circuit of the quantum circuit of the Grover's algorithm.
FIG. 19 is a diagram illustrating an example of a change in the TVD for each equivalent circuit according to noise in the Grover's algorithm.

DESCRIPTION OF EMBODIMENTS

Hereinafter, the invention an its preferred embodiments will be described with the help of illustrative examples with reference to the drawings.

[First Example]

A first example is a quantum circuit design method for converting a quantum gate into an equivalent circuit that can reduce an error rate, in consideration of characteristics of a qubit to be used, when the quantum gate that is not supported by a quantum device of a quantum computer is converted into a native gate.

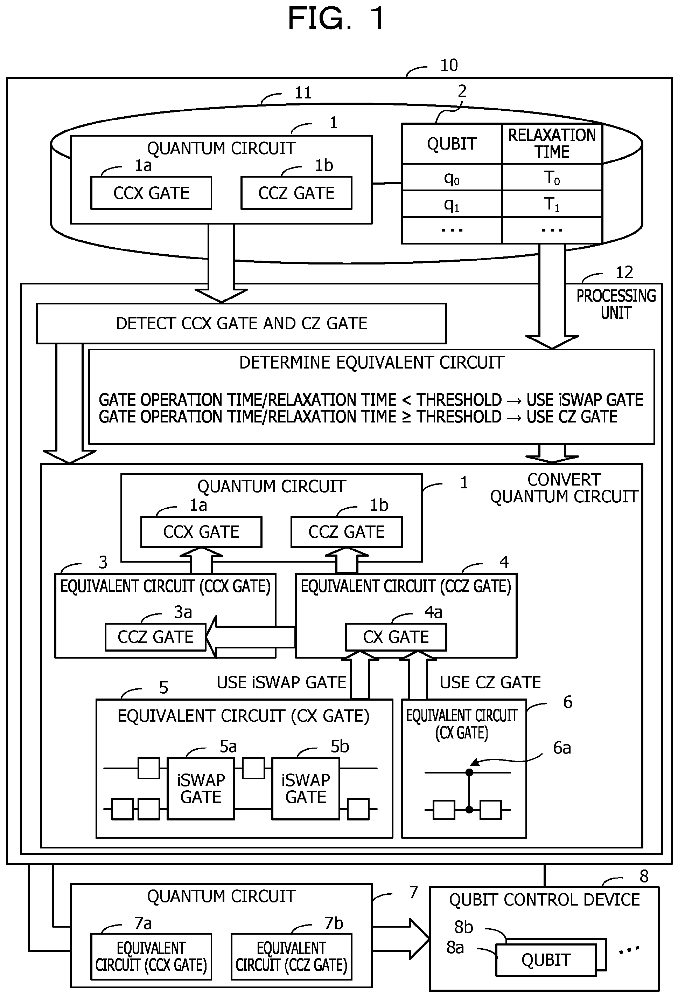

FIG. 1 is a diagram illustrating an example of the quantum circuit design method. In FIG. 1, a quantum computer including a quantum circuit design device 10 and a qubit control device 8 is illustrated. The quantum circuit design device 10 can execute the quantum circuit design method according to the first embodiment, by executing a quantum circuit design program.

The quantum circuit design device 10 is coupled to the qubit control device 8. The qubit control device 8 includes a plurality of qubits 8a, 8b,... and performs quantum calculation using the qubits 8a, 8b,.... The quantum circuit design device 10 can design an appropriate quantum circuit 7 according to characteristics of the qubits 8a, 8b,... included in the qubit control device 8.

The quantum circuit design device 10 includes a storage unit 11 and a processing unit 12. The storage unit 11 is, for example, a memory or a storage device included in the quantum circuit design device 10. The processing unit 12 is, for example, a processor or an arithmetic circuit included in the quantum circuit design device 10.

The storage unit 11 stores a quantum circuit 1 and qubit characteristic information 2. The quantum circuit 1 is information indicating an operation procedure of the qubit used to obtain a solution of a problem to be solved by the quantum calculation. In the quantum circuit 1, a gate operation on the qubit is indicated by the quantum gate. The quantum gate used for the quantum circuit 1 is not limited to a quantum gate supported by hardware of the quantum device of the quantum computer. Therefore, the quantum circuit 1 includes a quantum gate that operates three or more qubits. For example, the quantum circuit 1 includes a CCX gate 1a (referred to as Toffoli gate) or a CCZ gate 1b.

The qubit characteristic information 2 stores information regarding the characteristics of each of the qubits 8a, 8b,... included in the qubit control device 8. For example, the qubit characteristic information 2 includes a relaxation time indicating a period in which information regarding a quantum state of each of the qubits 8a, 8b,... can be held. Furthermore, the qubit characteristic information 2 can include a fidelity for each of the qubits 8a, 8b,.... The fidelity is an index indicating how close a state of the qubit is to an ideal quantum state.

The processing unit 12 converts the quantum circuit 1 stored in the storage unit 11 into the quantum circuit 7 that can be mounted on the qubit control device 8. For example, the processing unit 12 converts the quantum gate that operates the three or more qubits in the quantum circuit 1 into an equivalent circuit obtained by combining a one-qubit gate or a two-qubit gate. Furthermore, in a case where the quantum device of the qubit control device 8 cannot perform a gate operation of a CX gate (CNOT gate) although the quantum device of the qubit control device 8 can perform a gate operation of a CZ gate, the processing unit 12 converts the CX gate into an equivalent circuit using the CZ gate. Specifically, the processing unit 12 executes the following processing.

The processing unit 12 detects a first quantum gate that cannot execute the gate operation with the quantum device of the quantum computer, from the quantum circuit 1 indicating the gate operation to the plurality of qubits 8a, 8b,... included in the qubit control device 8 in the quantum computer. The first quantum gate is, for example, the CCX gate 1a or the CCZ gate 1b.

Next, the processing unit 12 determines an equivalent circuit to be mounted, from among a plurality of equivalent circuits that implements a gate operation same as that of the first quantum gate, based on a relaxation time of a qubit to be operated by the first quantum gate. The plurality of equivalent circuits includes quantum circuits using a second quantum gate that can execute the gate operation with the quantum device of the quantum computer. For example, the processing unit 12 determines the equivalent circuit to be mounted, based on a ratio between a gate operation time of the two-qubit gate of the quantum computer and the relaxation time of the quantum bit to be operated. In this case, the processing unit 12 acquires a minimum value of the relaxation time of each of the plurality of qubits to be operated. Then, the processing unit 12 compares a value of the ratio between the gate operation time and the minimum value of the relaxation time (gate operation time/relaxation time) with a predetermined threshold. If the "gate operation time/relaxation time" is less than the threshold, the processing unit 12 determines to perform conversion into an equivalent circuit using an iSWAP gate. Furthermore, if the "gate operation time/relaxation time" is equal to or more than the threshold, the processing unit 12 determines to perform conversion into the equivalent circuit using the CZ gate.

When the equivalent circuit to be mounted is determined, the processing unit 12 converts the first quantum gate in the quantum circuit 1 into the determined equivalent circuit. For example, in a case where the detected first quantum gate is the CCX gate 1a, first, the processing unit 12 converts the CCX gate 1a into an equivalent circuit 3 that performs a gate operation similar to the CCX gate 1a. The equivalent circuit 3 includes a CCZ gate 3a.

Next, the processing unit 12 converts the CCZ gate 3a included in the equivalent circuit 3 into an equivalent circuit 4 that performs a gate operation similar to the CCZ gate 3a. The equivalent circuit 4 includes a CX gate 4a. Furthermore, in a case where the detected first quantum gate is the CCZ gate 1b, the processing unit 12 converts the CCZ gate 1b into the equivalent circuit 4.

Moreover, the processing unit 12 converts the CX gate 4a in the equivalent circuit 4 into one of two equivalent circuits 5 and 6 that perform a gate operation similar to the CX gate 4a. The equivalent circuit 5 includes iSWAP gates 5a and 5b. The equivalent circuit 6 includes a CZ gate 6a. For example, in a case where it is determined to perform conversion into the equivalent circuit using the iSWAP gate, the processing unit 12 converts the CX gate 4a in the equivalent circuit 4 into the equivalent circuit 5. In a case where it is determined to perform the conversion into the equivalent circuit using the CZ gate, the processing unit 12 converts the CX gate 4a in the equivalent circuit 4 into the equivalent circuit 6.

Then, the processing unit 12 instructs the qubit control device 8 to perform quantum calculation according to the quantum circuit 7 generated by converting the first quantum gate of the quantum circuit 1 into the equivalent circuit. The quantum circuit 7 includes equivalent circuits 7a and 7b, for example, instead of the CCX gate 1a and the CCZ gate 1b of the quantum circuit 1. The quantum circuit 7 includes only a quantum gate natively supported with the quantum device by the qubit control device 8. The qubit control device 8 performs a gate operation by the quantum gate indicated by the quantum circuit 7 on the qubits 8a, 8b,... and measures states of the qubits 8a, 8b,... after the gate operation according to the quantum circuit 7 has been performed.

In this way, the processing unit 12 can convert the CCX gate 1a or the CCZ gate 1b into the equivalent circuits 7a and 7b with a less error rate, based on the relaxation time of the qubits 8a, 8b,.... As a result, an error rate of the quantum calculation by the qubit control device 8 is reduced, and highly accurate calculation becomes possible.

Furthermore, the processing unit 12 determines the equivalent circuit to be mounted, based on the ratio between the gate operation time of the two-qubit gate and the relaxation time of the qubit to be operated. As a result, an influence of noise according to the relaxation time can be correctly evaluated, and it is possible to appropriately determine a conversion destination equivalent circuit.

Furthermore, the processing unit 12 calculates the value of the ratio between the gate operation time and the relaxation time, using a minimum value of the relaxation time of each of the plurality of quantum gates operated by the first quantum gate to be converted, and compares the value with the threshold. In this way, the conversion destination equivalent circuit is determined, using the minimum value of the relaxation time of each quantum gate. As a result, the conversion destination equivalent circuit is determined, according to characteristics of a quantum gate with poor quality.

Since an error of the gate operation on the qubit is accumulated for each gate operation, if there is a quantum gate with a high error rate, an error rate of a quantum circuit that operates the quantum gate also increases. Therefore, by determining the conversion destination equivalent circuit in accordance with the characteristics of the quantum gate with the poor quality, it is possible to correctly evaluate the quality of each of the plurality of equivalent circuits and to determine the conversion destination equivalent circuit.

Note that the relaxation times of the qubits 8a, 8b,... change due to various effects. Therefore, the processing unit 12 may periodically (for example, every day) measure the relaxation time of each of the qubits 8a, 8b,... and update the qubit characteristic information 2. As a result, when the quantum circuit 1 is converted, the conversion destination equivalent circuit can be determined using the latest relaxation time of each of the qubits 8a, 8b,....

Furthermore, by using a qubit with excellent quality, as the qubit to be operated in the quantum circuit 7, it is also possible to improve the accuracy of the quantum calculation. Therefore, the processing unit 12 determines the qubit operated by the quantum circuit, based on the fidelities of the plurality of qubits 8a, 8b,... included in the quantum computer. For example, the processing unit 12 determines a qubit group of which an average fidelity is the highest, from among continuous qubit groups as many as the number of qubits used for the quantum circuit 7, as a qubit group operated by the quantum circuit 7. Here, the continuous qubit group includes a plurality of qubits in which qubits adjacent each other have a coupling relationship each other when these qubits are arranged in line. By using the qubit with a high fidelity, it is possible to perform quantum calculation with high accuracy.

[Second Example]

Next, a second example will be described. The second example is a system that allocates a qubit optimum for a quantum circuit and performs quantum calculation with the quantum circuit optimized according to a relaxation time of a qubit, in consideration of a fidelity of the qubit.

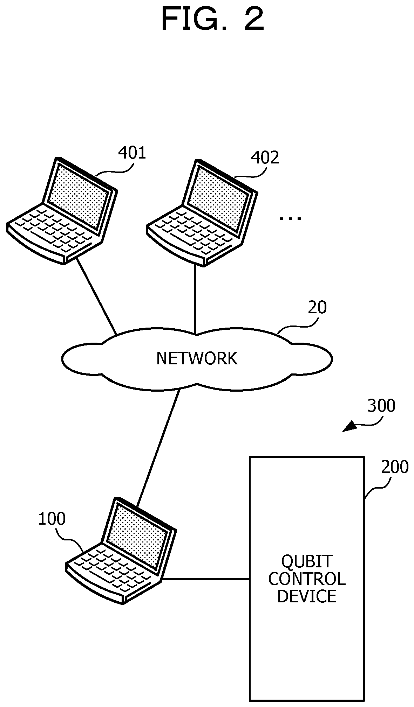

FIG. 2 is a diagram illustrating an example of a system configuration. A quantum computer 300 is a gate-type quantum computer. The quantum computer 300 includes a control computer 100 and a qubit control device 200. To the control computer 100, terminal devices 401, 402,... are coupled via a network 20. The terminal devices 401, 402,... are computers used by users who request quantum calculation by the quantum computer 300. The control computer 100 receives quantum circuits from the terminal devices 401, 402,.... The quantum circuit indicates order of operations on qubits by arrangement of elements such as gates. The qubit is a bit capable of expressing a superposed state of a state of "0" and a state of "1".

The control computer 100 instructs the qubit control device 200 to control the qubits according to the quantum circuits received from the terminal devices 401, 402,.... Furthermore, the control computer 100 acquires a measurement result of each qubit from the qubit control device 200.

The qubit control device 200 includes a plurality of qubits and a device for operating each of the plurality of qubits. The plurality of qubits included in the qubit control device 200 may be, for example, in a superconducting system or an ion trap system. Furthermore, the plurality of qubits may be in a diamond spin system. In a case where the qubit is in the superconducting system, the qubit control device 200 may include a refrigerator for cooling the qubits.

The qubit control device 200 irradiates the qubits with microwaves, in response to the instruction from the control computer 100, for example. Furthermore, the device for operating each of the plurality of qubits measures the state of each of the plurality of qubits and transmits the state to the control computer 100.

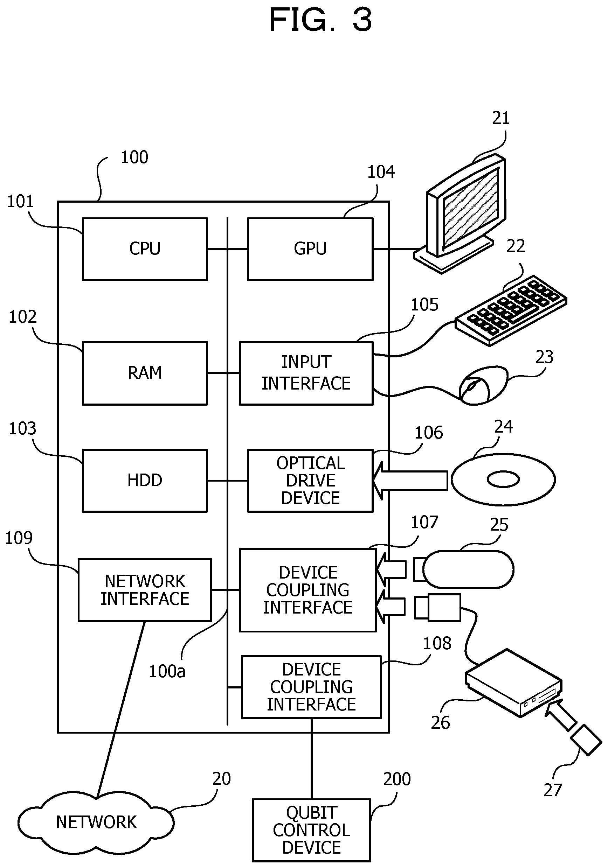

FIG. 3 is a diagram illustrating a configuration example of hardware of the control computer. The entire device of the control computer 100 is controlled by a central processing unit (CPU) 101. The CPU 101 is a processor that executes a program command. Note that the CPU 101 may include a plurality of processor cores. Furthermore, the CPU 101 may be a plurality of processors, or may be a micro processing unit (MPU), a digital signal processor (DSP), or the like. Furthermore, at least a part of functions implemented by the CPU 101 executing a program may be implemented by an electronic circuit such as an application specific integrated circuit (ASIC) or a programmable logic device (PLD). To the CPU 101, a random access memory (RAM) 102 and a plurality of peripheral devices are coupled via a bus 100a.

The RAM 102 is a main storage device of the control computer 100. In the RAM 102, at least a part of an operating system (OS) program or an application program to be executed by the CPU 101 is temporarily stored. Furthermore, in the RAM 102, various types of data to be used in processing by the CPU 101 is stored. Note that the control computer 100 may include a memory of a type other than the RAM, or may include a plurality of memories.

Examples of the peripheral devices coupled to the bus 100a include a hard disk drive (HDD) 103, a graphics processing unit (GPU) 104, an input interface 105, an optical drive device 106, device coupling interfaces 107 and 108, and a network interface 109.

The HDD 103 is an auxiliary storage device of the control computer 100. The HDD 103 magnetically writes data to and reads data from a built-in magnetic disk. In the HDD 103, an OS program, an application program, and various types of data are stored. Note that the control computer 100 may include other types of auxiliary storage devices such as a flash memory or a solid state drive (SSD), or may include a plurality of auxiliary storage devices.

A monitor 21 is coupled to the GPU 104. The GPU 104 displays an image on a screen of the monitor 21 according to a command from the CPU 101. Examples of the monitor 21 include a display device using organic electro luminescence (EL), a liquid crystal display device, and the like.

A keyboard 22 and a mouse 23 are coupled to the input interface 105. The input interface 105 transmits signals transmitted from the keyboard 22 and the mouse 23 to the CPU 101. Note that the mouse 23 is an example of a pointing device, and another pointing device may also be used. Examples of the another pointing device include a touch panel, a tablet, a touch pad, a track ball, and the like.

The optical drive device 106 reads data recorded in an optical disk 24 by using a laser beam or the like. The optical disk 24 is a portable recording medium in which data is recorded in a manner readable by reflection of light. Examples of the optical disk 24 include a digital versatile disc (DVD), a DVD-RAM, a compact disc read only memory (CD-ROM), a CD-recordable (R)/rewritable (RW), and the like.

The device coupling interface 107 is a communication interface for coupling the peripheral devices to the control computer 100. For example, a memory device 25 and a memory reader/writer 26 may be coupled to the device coupling interface 107. The memory device 25 is a recording medium equipped with a communication function with the device coupling interface 107. The memory reader/writer 26 is a device that writes data to a memory card 27 or reads data from the memory card 27. The memory card 27 is a card-type recording medium.

The device coupling interface 108 is a communication interface for coupling the qubit control device 200 to the control computer 100. The control computer 100 transmits an instruction for controlling qubits to the qubit control device 200 via the device coupling interface 108.

The network interface 109 is coupled to the network 20. The network interface 109 exchanges data with another computer or communication device via the network 20.

The control computer 100 may implement processing functions of the second example with the hardware configuration as described above. Note that the quantum circuit design device 10 indicated in the first example may also be implemented by hardware similar to that of the control computer 100 illustrated in FIG. 3. Furthermore, the CPU 101 is an example of the processing unit 12 indicated in the first example.

The control computer 100 implements the processing functions of the second example by executing, for example, a program recorded in a computer-readable recording medium. A program in which processing content to be executed by the control computer 100 is described may be recorded in various recording media. For example, the program to be executed by the control computer 100 may be stored in the HDD 103. The CPU 101 loads at least a part of the programs in the HDD 103 into the RAM 102, and executes the loaded program. Furthermore, the program to be executed by the control computer 100 may also be recorded in a portable recording medium such as the optical disk 24, the memory device 25, or the memory card 27. For example, the program stored in the portable recording medium may be executed after being installed to the HDD 103 under the control of the CPU 101. Furthermore, the CPU 101 may directly read and execute the program from the portable recording medium.

In the above system, the control computer 100 acquires a quantum circuit in which a procedure of a gate operation of the qubit for the quantum calculation is described, from the terminal devices 401, 402,.... The quantum circuit acquired from the terminal devices 401, 402,... includes a gate operation of three or more qubit gates. On the other hand, a gate operation in the qubit control device 200 is limited to a gate operation of a one-qubit gate or a two-qubit gate. Therefore, the control computer 100 converts the quantum gate including three or more qubit gates included in the acquired quantum circuit into an equivalent circuit using the one-qubit gate or the two-qubit gate.

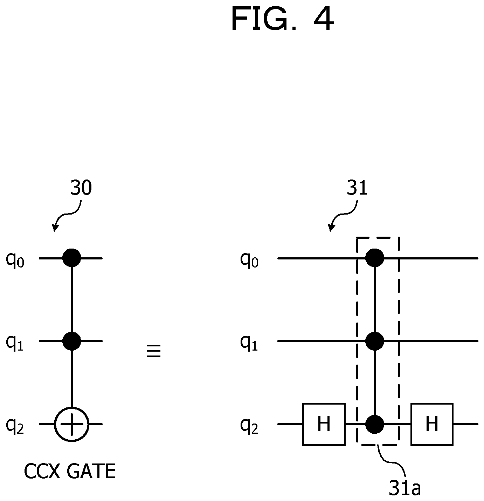

As an example, a method for converting a CCX (Toffoli) gate into the equivalent circuit will be described, with reference to FIGs. 4 to 7. The quantum circuit used in the following description has a horizontal line corresponding to each qubit that performs a gate operation. On the horizontal line, a quantum gate indicating a gate operation to be performed on the corresponding qubit is arranged. In the quantum circuit, a quantum gate indicating an operation to be performed earlier is arranged on the left.

FIG. 4 is a diagram illustrating an example of the equivalent circuit of the CCX gate. A CCX gate 30 indicates that, in a case where two control bits ($q_0$, $q_1$) are "1", an X gate is acted (invert bit) on one target bit ($q_2$). In the quantum circuit, a symbol obtained by combining + and a circle is arranged on a line corresponding to a qubit to be the target bit of the CCX gate 30, and points coupled to the symbol with a line are arranged on lines corresponding to the respective qubits to be the two control bits. Such a CCX gate 30 can be converted into an equivalent circuit 31 obtained by combining an H gate (Hadamard gate) and a CCZ gate 31a.

The equivalent circuit 31 is a quantum circuit that performs a gate operation equivalent to the CCX gate 30. In the equivalent circuit 31, two H gates (rectangles described as "H" in FIG. 4) are arranged having the CCZ gate 31a interposed therebetween, in the qubit that is the target bit. The CCZ gate 31a indicates that, in a case where the two control bits ($q_0$, $q_1$) are "1", a Z gate is acted (invert phase) on the one target bit ($q_2$).

The CCZ gate 31a included in the equivalent circuit 31 can be converted into an equivalent circuit in which a one-qubit gate and a two-qubit gate are combined.

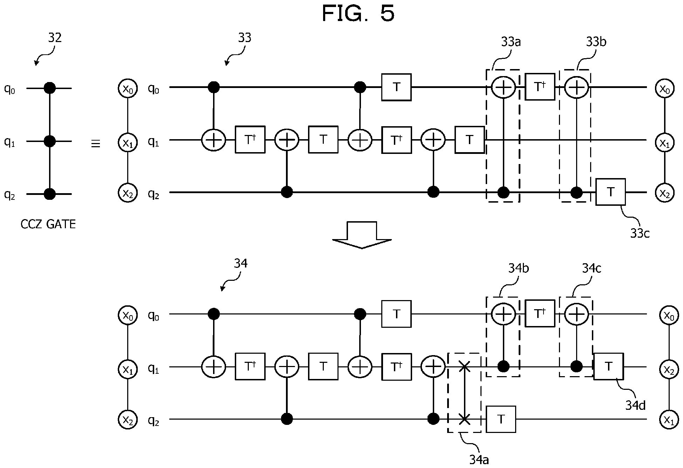

FIG. 5 is a diagram illustrating an example of an equivalent circuit of the CCZ gate. An equivalent circuit 33 is a quantum circuit obtained by combining the one-qubit gate and the two-qubit gate, equivalent to a CCZ gate 32 for the qubits $q_0$, $q_1$, and $q_2$. In the equivalent circuit 33, each of blocks described as T arranged on the horizontal lines corresponding to the respective qubits $q_0$, $q_1$, and $q_2$ indicates a T gate. The T gate indicates an operation for shifting a phase by a predetermined value. Furthermore, in the equivalent circuit 33, each of blocks described as $T^\dagger$ arranged on the horizontal lines corresponding to the respective qubits $q_0$, $q_1$, and $q_2$ indicates a $T^\dagger$ gate. The $T^\dagger$ gate indicates an operation for shifting the phase by the predetermined value in an opposite direction to the T gate.

In the equivalent circuit 33, each of symbols obtained by combining + and a circle arranged on the horizontal lines corresponding to the respective qubits $q_0$, $q_1$, and $q_2$, and a point coupled to the symbol with a line and arranged on the line corresponding to each of the qubits $q_0$, $q_1$, and $q_2$ indicate CX gates. Note that the symbol obtained by combining + and the circle is arranged on a line corresponding to a qubit to be a target bit of the CX gate, and the point is arranged on a line corresponding to a qubit to be a control bit of the CX gate. The CX gate indicates that a bit of the target bit is inverted in a case where the control bit is "1".

In this way, the CCZ gate 32 can be converted into the equivalent circuit 33 obtained by combining the one-qubit gate and the two-qubit gate. However, the equivalent circuit 33 includes CX gates 33a and 33b for the qubits $q_0$ and $q_2$. In the quantum computer, the two-qubit gate can be operated only between the coupled two qubits. When an actual qubit in the quantum computer 300 is allocated to the qubit indicated by the quantum circuit, coupled qubits among the actual qubits are allocated to adjacent qubits in the quantum circuit. However, there is a possibility that uncoupled qubits, among the actual qubits, are allocated to qubits that are not adjacent in the quantum circuit. In that case, the equivalent circuit 33 is converted into an equivalent circuit 34 using a SWAP gate 34a.

In the equivalent circuit 34, the SWAP gate 34a is inserted, at a position in front of the CX gates 33a and 33b in the equivalent circuit 33. The SWAP gate 34a indicates a gate operation for exchanging states of two qubits. By inserting the SWAP gate 34a, the CX gates 33a and 33b are replaced with CX gates 34b and 34c for the qubits $q_0$ and $q_1$. Furthermore, a final T gate 33c of the qubit $q_2$ in the equivalent circuit 33 is replaced with a final T gate 34d of the qubit $q_1$ in the equivalent circuit 34.

Note that, in the equivalent circuit 34, allocation of actual qubits in the qubit control device 200 to a qubit to be a quantum calculation target in a quantum algorithm is different between before and after the execution of the equivalent circuit 34. Therefore, regarding the equivalent circuits 33 and 34, a quantum state measured by each of the qubits $q_0$, $q_1$, and $q_2$ after execution id different.

For example, it is assumed that qubits to be the quantum calculation targets on the quantum algorithm be $x_0$, $x_1$, and $x_2$. When the equivalent circuit 33 is executed, it is assumed that the actual qubit $q_0$ in the qubit control device 200 be allocated to the qubit $x_0$. Furthermore, it is assumed that that the actual qubit $q_1$ in the qubit control device 200 be allocated to the qubit $x_1$. It is assumed that the actual qubit $q_2$ in the qubit control device 200 be allocated to the qubit $x_2$. In a case where the equivalent circuit 33 can be executed, a quantum state of the qubit $x_0$ is obtained by measuring the qubit $q_0$, a quantum state of the qubit $x_1$ is obtained by measuring the qubit $q_1$, and a quantum state of the qubit $x_2$ is obtained by measuring the qubit $q_2$.

Note that, if the qubits $q_0$ and $q_1$ are not coupled in the quantum computer 300, it is not possible to execute the equivalent circuit 33. In that case, the equivalent circuit 34 is executed. Since the SWAP gate 34a is included in the equivalent circuit 34, an actual qubit to be allocated is changed, for the qubits $x_1$ and $x_2$ of which states are exchanged in the SWAP gate 34a.

For example, although the qubit $q_1$ is allocated to the qubit $x_1$ on the quantum algorithm at the start of the execution of the equivalent circuit 34, the qubit $q_2$ is allocated at the end of the execution of the equivalent circuit 34. Furthermore, although the qubit $q_2$ is allocated to the qubit $x_2$ on the quantum algorithm at the start of the execution of the equivalent circuit 34, the qubit $q_1$ is allocated at the end of the execution of the equivalent circuit 34. In this case, after the execution of the equivalent circuit 34, the quantum state of the qubit $x_0$ is obtained by measuring the qubit $q_0$, the quantum state of the qubit $x_2$ is obtained by measuring the qubit $q_1$, and the quantum state of the qubit $x_1$ is obtained by measuring the qubit $q_2$.

In a case where the qubit control device 200 is caused to execute the quantum circuit including the equivalent circuit 34, the SWAP gate 34a in the equivalent circuit 34 is converted into a combination of CX gates. Furthermore, the equivalent circuit 34 is optimized.

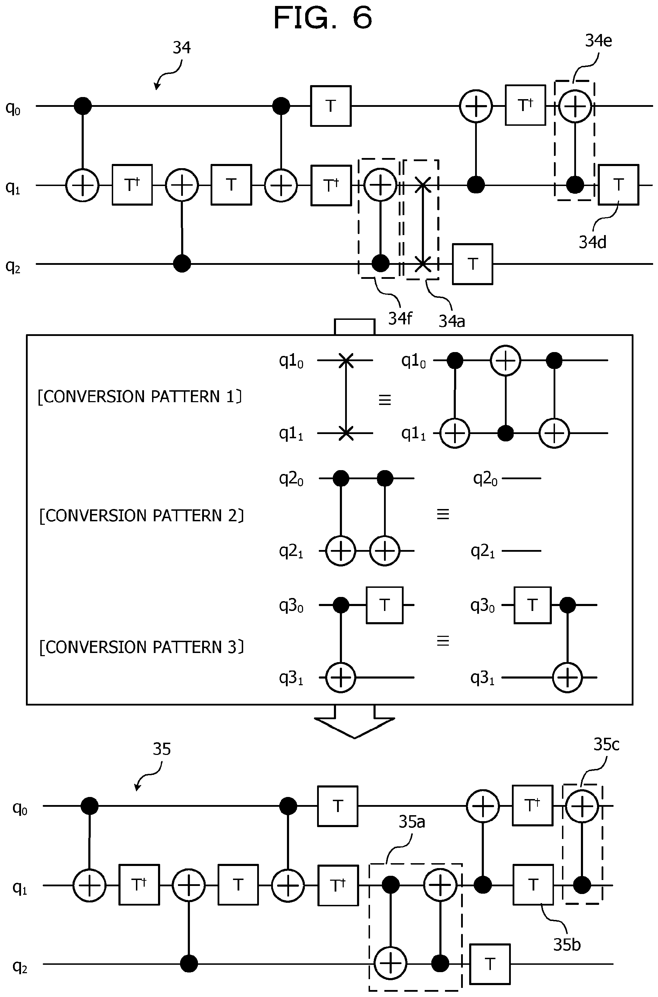

FIG. 6 is a diagram illustrating an example of the optimized equivalent circuit of the CCZ gate. In the example in FIG. 6, conversion of a circuit indicated by three conversion patterns is performed on the equivalent circuit 34, and an equivalent circuit 35 is formed.

The first conversion pattern (conversion pattern 1) indicates conversion from the SWAP gate into three CX gates. The second conversion pattern (conversion pattern 2) indicates that the consecutive two CX gates having the common control bit and target bit are the same as those in a case where no gate operation is performed and these CX gates can be deleted. The third conversion pattern (conversion pattern 3) indicates that, when there is the T gate in front of or behind the control bit of the CX gate, the position of the control bit of the CX gate and the position of the T gate may be interchanged.

For example, the SWAP gate 34a of the equivalent circuit 34 is converted into three CX gates according to the "conversion pattern 1", using a qubit $q1_0$ in the "conversion pattern 1" as the qubit $q_2$ of the equivalent circuit 34 and a qubit $q1_1$ as the qubit $q_1$ of the equivalent circuit 34. In this case, in the first CX gate of the three CX gates after conversion, the qubit $q_2$ serves as the control bit, and the qubit $q_1$ serves as the target bit.

Then, in the equivalent circuit 34, the first one of the three CX gates converted from the SWAP gate 34a and a CX gate 34f immediately before the SWAP gate 34a have a common control bit and a common target bit. In that case, the "conversion pattern 2" can be applied. As a result, the first one of the three CX gates converted from the SWAP gate 34a and the CX gate 34f immediately before the SWAP gate 34a are deleted. What remains in the equivalent circuit 35 after conversion are two CX gates 35a including the second and third CX gates among the three CX gates converted from the SWAP gate 34a.

Furthermore, in the qubit $q_1$ in the equivalent circuit 34, a control bit of a CX gate 34e is arranged before the final T gate 34d. In this case, the T gate 34d can be moved to the front of the CX gate 34e, by applying the "conversion pattern 3". As a result, in the equivalent circuit 35 after conversion, a T gate 35b corresponding to the T gate 34d is arranged in front of a final CX gate 35c for the qubit $q_1$.

Here, a gate operation time of the two qubits is 10 times or more than a gate operation time of the one-qubit gate. Therefore, as an index of the gate operation time for the equivalent circuit 35 after conversion, the number of two-qubit gates can be used. The two-qubit gate included in the equivalent circuit 35 includes seven CX gates.

By replacing the CCZ gate 31a of the equivalent circuit 31 of the CCX gate 30 illustrated in FIG. 4 with the equivalent circuit 35 illustrated in FIG. 6, the equivalent circuit of the CCX gate is obtained. Note that, in many cases, although the quantum computer 300 supports the CZ gate, the quantum computer 300 does not support the CX gate. For example, in a superconducting circuit system, a gate such as the CZ gate or the iSWAP gate is supported as the native gate. However, the CX gate is not necessarily supported. In a case where the CX gate is not supported, by replacing the CX gate included in the equivalent circuit 35 with the equivalent circuit using the CZ gate, a quantum circuit that can perform the gate operation with the qubit control device 200 is obtained.

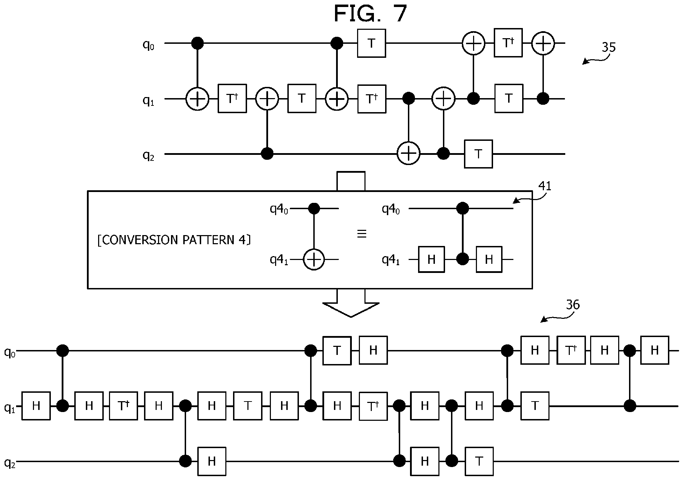

FIG. 7 is a diagram illustrating an example of a mountable equivalent circuit of the CCZ gate. The CX gate can be converted into an equivalent circuit 41 using the CZ gate, as indicated in a "conversion pattern 4". In the equivalent circuit 41, the CX gate is replaced with the CZ gate, and two H gates are arranged with the CZ gate interposed therebetween, in the qubit serving as the target bit of the CX gate. By converting the seven CX gates included in the equivalent circuit 35 into the equivalent circuit 41, an equivalent circuit 36 is obtained.

Furthermore, as the native gate of the quantum computer 300, the iSWAP gate is used other than the CZ gate. Then, the CX gate can be replaced with the equivalent circuit using the iSWAP gate.

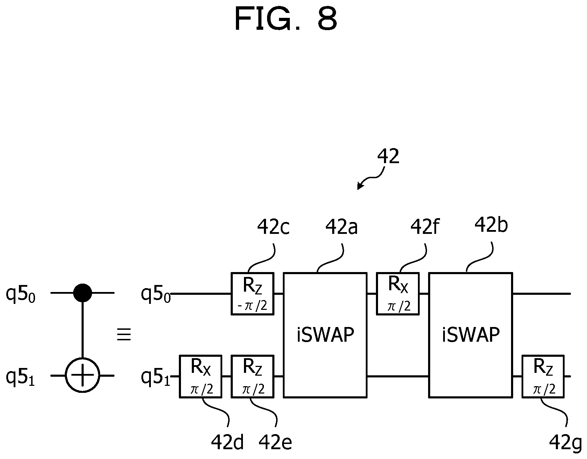

FIG. 8 is a diagram illustrating an example of the equivalent circuit of the CX gate using the iSWAP gate. An equivalent circuit 42 of the CX gate includes two iSWAP gates 42a and 42b and five rotation gates 42c to 42g. In the equivalent circuit 42, first, the rotation gate 42c that rotates by "$-\pi/2$" around the Z axis is arranged on a side of the control bit of the CX gate. Furthermore, on the side of the target bit of the CX gate, the rotation gate 42d that rotates by "$\pi/2$" around the X axis and the rotation gate 42e that rotates by "$\pi/2$" around the Z axis are arranged. After these rotation gates 42c to 42e, the first iSWAP gate 42a is arranged.

After the first iSWAP gate 42a, the rotation gate 42f that rotates by "$\pi/2$" around the X axis is arranged on the side of the control bit of the CX gate. After this rotation gate 42f, the second iSWAP gate 42b is arranged. Then, after the second iSWAP gate 42b, the rotation gate 42g that rotates by "$\pi/2$" around the Z axis is arranged on the side of the target bit of the CX gate.

Here, the quantum computer 300 is an NISQ. The NISQ has a small number of qubits and is not able to correct errors. The error occurs due to an influence of noise, and as the number of gates included in the quantum circuit is larger, the occurred errors accumulate. Therefore, when the quantum gate included in the quantum circuit is converted into the native gate, implementation in consideration of noise is required. For example, in a case where the CCX gate is mounted, it is required to appropriately determine whether or not to mount the CCX gate on the equivalent circuit using the CX gate or mount the CCX gate using the iSWAP gate.

Ease of receiving an influence of noise regarding a qubit is represented by a fidelity. A higher fidelity indicates that the qubit is less likely to receive the influence of the noise. The fidelity of the quantum gate is an index indicating whether or not the quantum gate operation on the qubit is close to an ideal operation. Furthermore, the qubit has a limited time when the qubit can hold information without losing the information. Such a time is referred to as a relaxation time. When an operation time of the quantum circuit exceeds the relaxation time, the qubit information is lost, and an error occurs. Note that the relaxation time includes an average time (energy relaxation time) in which an excited state is maintained and an average time (phase relaxation time) in which superposition is maintained. Hereinafter, the energy relaxation time is referred to as "T1", and the phase relaxation time is referred to as "T2".

In this way, the index indicating the likelihood of the occurrence of the error includes the fidelity of the qubit, the relaxation time of the qubit, the fidelity of the quantum gate, or the like. A value of each index of the likelihood of the occurrence of the error differs for each qubit, due to variations at the time of producing the quantum device or the like. Therefore, it is important to appropriately determine on which qubit the quantum circuit is mounted with which native gate, when the control computer 100 converts the acquired quantum circuit into the mountable quantum circuit.

Here, when the control computer 100 performs simulation so as to obtain an equivalent circuit with the lowest error, all combinations are verified, and a calculation time becomes enormous. Therefore, the control computer 100 determines the quantum circuit to be mounted, based on the index of the likelihood of the occurrence of the error.

For example, the control computer 100 measures the fidelity and T1 of all the qubits. The control computer 100 allocates a qubit with a high fidelity in which qubits as many as qubits used to execute the quantum algorithm can be continuously arranged, to the quantum circuit to be executed. Then, the control computer 100 determines a native two quantum gates used for the quantum circuit to be mounted, based on a threshold based on the allocated qubit having the shortest T1 value among the three qubits for operating the CCX gate or the CCZ gate.

Next, functions of the control computer 100 will be described in detail.

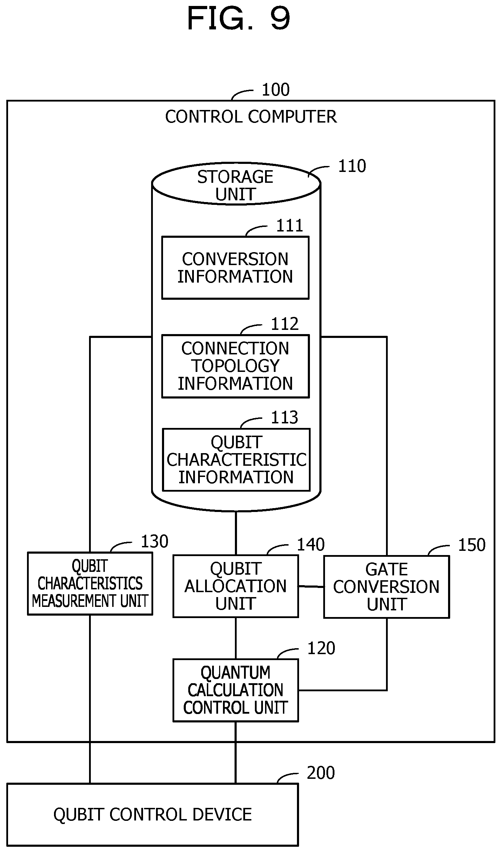

FIG. 9 is a block diagram illustrating an example of functions of the control computer. The control computer 100 includes a storage unit 110, a quantum calculation control unit 120, a qubit characteristics measurement unit 130, a qubit allocation unit 140, and a gate conversion unit 150.

The storage unit 110 stores conversion information 111, connection topology information 112, and qubit characteristic information 113. In the conversion information 111, a quantum gate to be converted and an equivalent circuit are registered in association with each other. In the connection topology information 112, connection topology information indicating a coupling relationship between the qubits in the qubit control device 200 is registered. In the qubit characteristic information 113, the fidelity and T1 of each qubit in the qubit control device 200 are registered.

The quantum calculation control unit 120 controls the quantum calculation. First, the quantum calculation control unit 120 acquires the quantum circuit. For example, the quantum calculation control unit 120 receives, from the terminal devices 401, 402,..., requests for quantum calculation by the quantum computer 300 and quantum circuits. Then, the quantum calculation control unit 120 controls the qubit control device 200 according to the quantum circuits converted by the gate conversion unit 150.

The qubit characteristics measurement unit 130 measures the fidelity and T1 of each qubit in the qubit control device 200, at predetermined intervals. For example, the qubit characteristics measurement unit 130 controls the qubit control device 200 and measures the fidelity and T1. about once a day. The qubit characteristics measurement unit 130 updates the qubit characteristic information 113, each time when the qubit characteristics measurement unit 130 performs measurement.

The qubit allocation unit 140 allocates the qubit in the qubit control device 200 to a qubit used for the quantum circuit acquired by the quantum calculation control unit 120. For example, the qubit allocation unit 140 refers to the connection topology information 112 and allocates the qubits, in accordance with a condition such that vertically adjacent qubits are coupled in the quantum circuit. In a case where there is a plurality of allocation patterns of qubits that satisfy the condition, the qubit allocation unit 140 adopts an allocation pattern with a high average fidelity of the included qubit.

The gate conversion unit 150 refers to the conversion information 111 and converts the quantum circuit acquired from the terminal devices 401, 402,... into the quantum circuit that can be mounted on the qubit control device 200. Note that, when converting the CX gate, the gate conversion unit 150 determines the conversion destination equivalent circuit, based on the minimum value of the values of T1 of the respective qubits allocated to the quantum circuit.

Note that, lines coupling the individual elements illustrated in FIG. 9 indicate a part of a communication path, and a communication path other than the illustrated communication path may also be set. Furthermore, the function of each element illustrated in FIG. 9 may be implemented, for example, by causing a computer to execute a program module corresponding to the element.

Next, the conversion information 111, the connection topology information 112, and the qubit characteristic information 113 stored in the storage unit 110 will be described in detail.

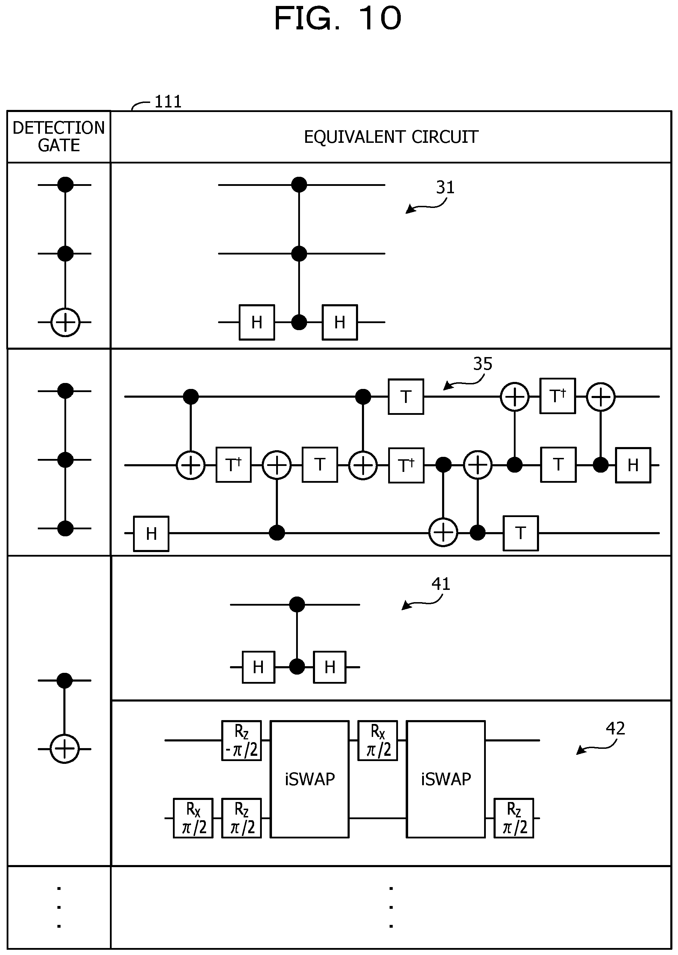

FIG. 10 is a diagram illustrating an example of the conversion information. In the conversion information 111, fields of a detection gate and an equivalent circuit are provided. In the field of the detection gate, a gate detected as a conversion target is set. In the field of the equivalent circuit, an equivalent circuit of the detection gate is set. For example, in the conversion information 111, the equivalent circuit 31 using the CCZ gate is registered, in association with the CCX gate. Furthermore, in the conversion information 111, the equivalent circuit 35 obtained by combining the one-qubit gate and two-qubits is registered, in association with the CCZ gate. Moreover, in the conversion information 111, the equivalent circuit 41 using the CZ gate and the equivalent circuit 42 using the iSWAP gate are registered, in association with the CX gate.

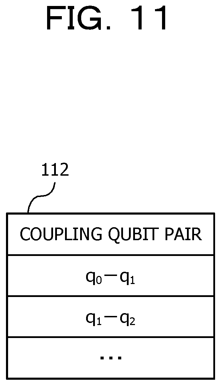

FIG. 11 is a diagram illustrating an example of the connection topology information. In the connection topology information 112, a plurality of coupling qubit pairs indicating two qubits having a coupling relationship is registered. In a case of the two qubits indicated by the coupling qubit pair, an operation of the two-qubit gate using these as an operation target can be executed by the qubit control device 200.

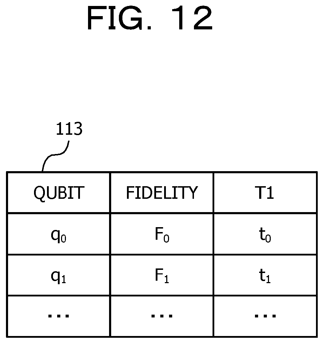

FIG. 12 is a diagram illustrating an example of the qubit characteristic information. In the qubit characteristic information 113, a fidelity and T1 of the corresponding qubit are set, in association with an identifier of each qubit included in the qubit control device 200. The fidelity and T1 of the qubit are periodically updated by the qubit characteristics measurement unit 130.

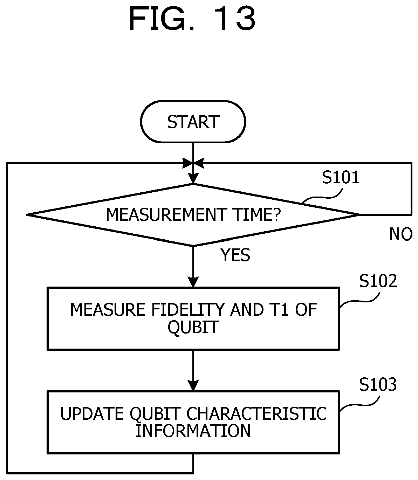

FIG. 13 is a flowchart illustrating an example of a procedure of qubit characteristic information update processing. Hereinafter, the processing illustrated in FIG. 13 will be described in order of step numbers.

[Step S101] The qubit characteristics measurement unit 130 determines whether or not a preset measurement time (for example, daily specific time) has come. In a case where the measurement time comes, the qubit characteristics measurement unit 130 proceeds the processing to step S102. Furthermore, if the measurement time does not come, the qubit characteristics measurement unit 130 repeats step S101 and waits for the measurement time.

[Step S102] The qubit characteristics measurement unit 130 controls the qubit control device 200 and measures the fidelity and T1 of each qubit.

[Step S103] The qubit characteristics measurement unit 130 updates the values of the fidelity and the T1 of each qubit in the qubit characteristic information 113 to latest measurement values. Thereafter, the qubit characteristics measurement unit 130 proceeds the processing to step S101.

Next, a method for determining the conversion destination equivalent circuit when the CX gate is converted into the equivalent circuit will be described in detail.

When T1 (average time in which excited state is maintained) and T2 (average time in which superposition is maintained) of a qubit affected by relaxation time noise are known, an error occurring in the qubit is represented by a Choi matrix indicated by the formula (1) for each gate operation on the qubit.

[Expression 1]

$$
C = \begin{pmatrix}
1 - p\left(1 - e^{-\frac{t}{T1}}\right) & 0 & 0 & e^{-\frac{t}{T2}} \\
0 & (1-p)e^{-\frac{t}{T1}} & 0 & 0 \\
0 & 0 & pe^{-\frac{t}{T1}} & 0 \\
e^{-\frac{t}{T2}} & 0 & 0 & 1 - (1-p)e^{-\frac{t}{T1}}
\end{pmatrix} \quad (1)
$$

The reference t represents a gate execution time. The reference p represents a probability vector (probability vector). When there is no noise, p = 0. From the formula (1), it is found that the influence of the noise depends on a ratio between the gate execution time t and the relaxation time (T1 or T2). Specifically, as a value of the ratio between the gate execution time t and the relaxation time (gate execution time/relaxation time) is larger, the influence of the noise is more easily received. That is, it is not possible to correctly determine the degree of the influence of the noise by using only the relaxation time.

The gate execution time t of the one-qubit gate is a time determined in advance in the quantum computer 300 and does not depend on a type of the one-qubit gate. Similarly, the gate execution time of the two-qubit gate also does not depend on a type of the two-qubit gate.

The operation of the two-qubit gate takes time, and the gate execution time of the two-qubit gate is set to be a value much longer than the gate execution time of the one-qubit gate. Therefore, in the quantum circuit, the number of two-qubit gates is used as the index of the likelihood of the occurrence of the error. The number of two-qubit gates of the quantum circuit is referred to as a circuit length. In a quantum circuit with a shorter circuit length, an error is less likely to occur.

Furthermore, the iSWAP gate has a smaller influence of coherent noise than the CZ gate. On the other hand, when the two equivalent circuits 41 and 42 of the CX gate are compared, the equivalent circuit 41 using the CZ gate includes only one two-qubit gate. However, the equivalent circuit 42 using the iSWAP gate includes two two-qubit gates. That is, the circuit length of the equivalent circuit 42 is twice of the equivalent circuit 41. As the circuit length is longer, an influence of decoherence noise increases. Although the decoherence noise varies depending on the ratio between the relaxation time and the gate operation time, the relaxation time differs for each qubit.

In a case where the relaxation time is sufficiently longer with respect to the gate execution time and the value of the ratio between the gate execution time and the relaxation time is small, the influence of the coherent noise becomes larger than the noise regarding the relaxation time. In a case where the influence of the coherent noise is larger, even if the circuit length is doubled, there is a possibility that the iSWAP gate that has a smaller influence of the coherent noise has a smaller influence of the noise as a whole. Therefore, in a case where the gate conversion unit 150 converts the CX gate into one of the equivalent circuits 41 or 42, the gate conversion unit 150 determines the conversion destination equivalent circuit, based on the value of the ratio between the gate execution time and the relaxation time, for the two-qubit gate.

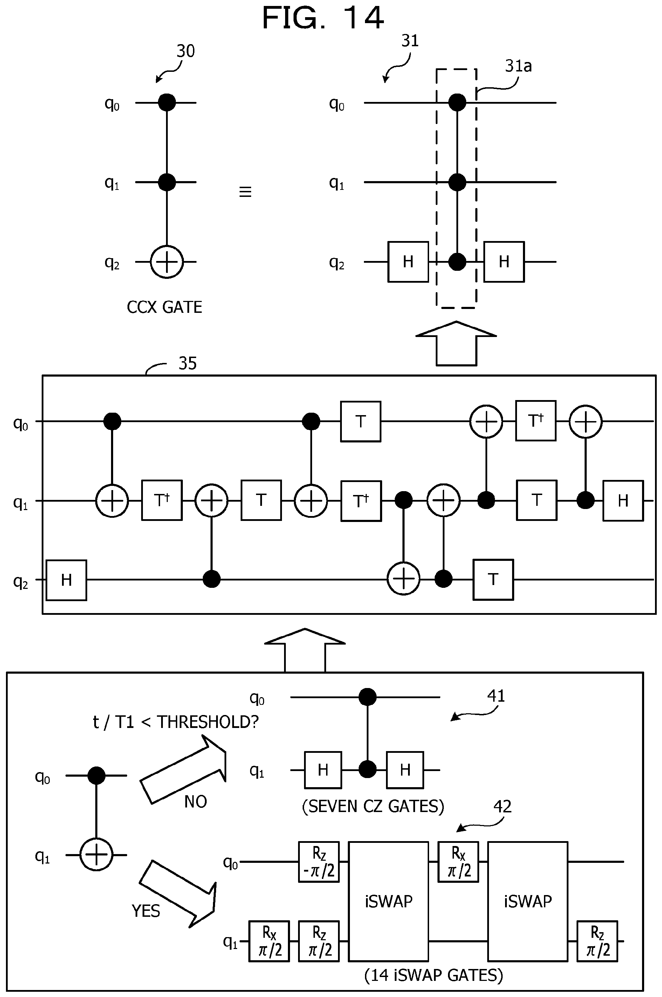

FIG. 14 is a diagram illustrating an example of CCX gate conversion processing. The gate conversion unit 150 converts the CCX gate 30 into the equivalent circuit 31 using the CCZ gate 31a. Next, the gate conversion unit 150 converts the CCZ gate 31a in the equivalent circuit 31 into the equivalent circuit 35 including one qubit and two qubits. The equivalent circuit 35 includes the seven CX gates. Therefore, the gate conversion unit 150 converts each of the seven CX gates into one of the equivalent circuits 41 and 42, according to whether or not the value of the ratio between the gate execution time t and T1 of the two-qubit gate (t/T1) is less than a threshold.

Specifically, if t/T1 is equal to or more than the threshold, the gate conversion unit 150 converts each CX gate into the equivalent circuit 41 using the CZ gate. In this case, the quantum circuit after conversion includes seven CZ gates. Furthermore, if t/T1 is less than the threshold, the gate conversion unit 150 converts each CX gate into the equivalent circuit 42 using the iSWAP gate. In this case, the quantum circuit after conversion includes 14 iSWAP gates.

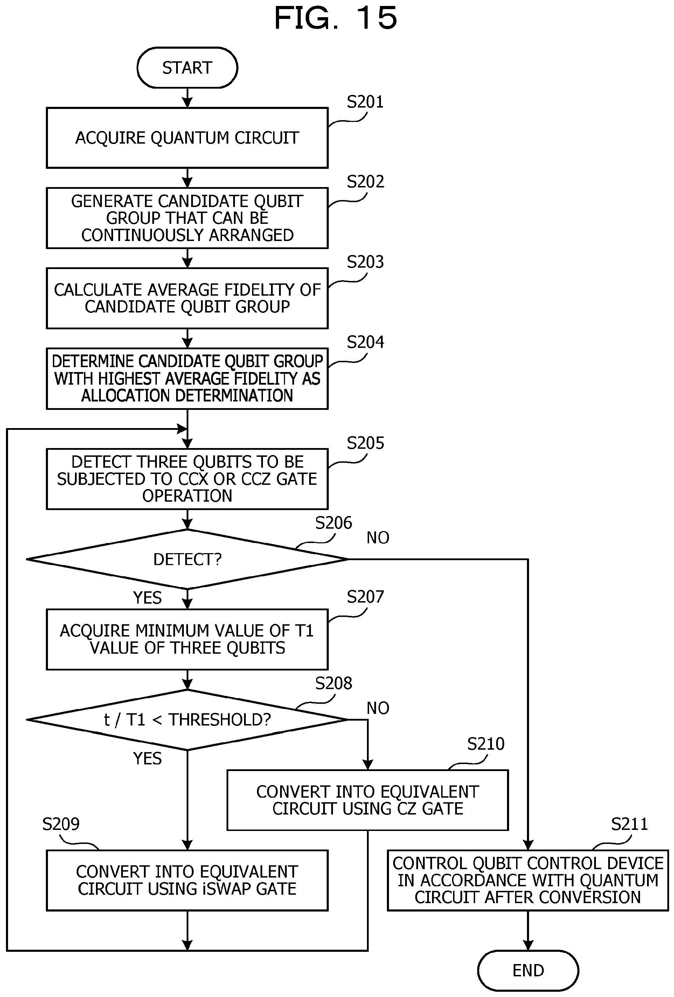

FIG. 15 is a flowchart illustrating an example of a procedure of quantum circuit conversion processing. Hereinafter, the processing illustrated in FIG. 15 will be described in order of step numbers.

[Step S201] The quantum calculation control unit 120 acquires the quantum circuit. For example, the quantum calculation control unit 120 receives, from the terminal devices 401, 402,..., requests for quantum calculation by the quantum computer 300 and the quantum circuits.

[Step S202] The qubit allocation unit 140 generates a candidate qubit group that can be continuously arranged, based on the connection topology information 112. Capable of being continuously arranged means that a condition is satisfied such that the coupled qubits of the qubit control device 200 can be allocated to the vertically adjacent qubits in the quantum circuit.

[Step S203] The qubit allocation unit 140 refers to the qubit characteristic information 113 and calculates an average value of the fidelity of the qubit belonging to each generated candidate qubit group.

[Step S204] The qubit allocation unit 140 determines a candidate qubit group with the highest average fidelity as an allocation determination of the qubit of the quantum circuit.

[Step S205] The gate conversion unit 150 detects three qubits to be subjected to the CCX gate or CCZ gate operation, from the acquired quantum circuit.

[Step S206] The gate conversion unit 150 determines whether or not the three qubits are detected. In a case where it is determined that the three qubits are detected, the gate conversion unit 150 proceeds the processing to step S207. Furthermore, in a case of determining that the three qubits are not detected, the gate conversion unit 150 proceeds the processing to step S211.

[Step S207] The gate conversion unit 150 acquires a minimum value among the values of T1 of the respective detected three qubits, from the qubit characteristic information 113.

[Step S208] The gate conversion unit 150 determines whether or not the value of the ratio between the gate execution time t and the acquired T1 (t/T1) is less than the threshold. If the value of the ratio is less than the threshold, the gate conversion unit 150 proceeds the processing to step S209. Furthermore, if the value of the ratio is equal to or more than the threshold, the gate conversion unit 150 proceeds the processing to step S210.

[Step S209] The gate conversion unit 150 converts all the CCX gates or CCZ gates executed by the detected three qubits into the equivalent circuit using the iSWAP gate. Thereafter, the gate conversion unit 150 proceeds the processing to step S205.

[Step S210] The gate conversion unit 150 converts all the CCX gates or CCZ gates executed by the detected three qubits into the equivalent circuit using the CZ gate. Thereafter, the gate conversion unit 150 proceeds the processing to step S205.

[Step S211] The quantum calculation control unit 120 controls the qubit control device 200 in accordance with the quantum circuit after the conversion.

In this way, the CCX gate or the CCZ gate can be converted into the equivalent circuit with less influence of the noise. The threshold used to determine the equivalent circuit can be determined by evaluating the influence of the noise of the equivalent circuit using the iSWAP gate and the equivalent circuit using the CZ gate, for example.

An evaluation index of the influence from the noise includes, for example, total variation distance (TVD). The TVD is based on a sum of an ideal probability with no noise and a probability with noise. The TVD is represented by the following formula (2).

[Expression 2]

$$d_{TV}(\mathcal{P}, \mathcal{P}_{ideal}) = \frac{1}{2} \sum_{x \in X} |\mathcal{P}(x) - \mathcal{P}_{ideal}(x)| \qquad (2)$$

The reference $p_{ideal}(x)$ indicates an appearance probability of a sequence (bit sequence x) of values of qubits in an ideal situation (situation with no noise). The reference p (x) is an appearance probability of a bit sequence x measured by actual measurement or simulation. In the formula (2), for each bit sequence x belonging to a set X of bit sequences that can appear, a difference between a probability when noise occurs and a probability when no noise occurs is calculated. Then, 1/2 of the sum of these differences is the TVD. A smaller value of the TVD indicates less influence of the noise.

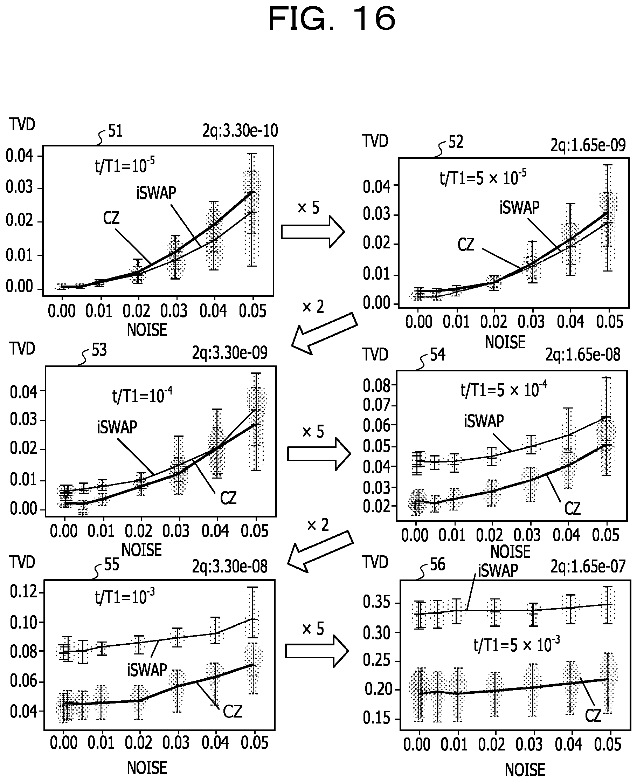

FIG. 16 is a diagram illustrating an example of a change in the TVD for each equivalent circuit according to the noise. In the example in FIG. 16, a characteristic of the qubit is "T1 = 33 $\mu$sec, T2 = 16 $\mu$sec". The value of the TVD according to the noise differs for each oracle to be calculated. In graphs 51 to 56, the TVD according to the noise is obtained for all the oracles, and a change in an average value of the TVD according to an increase in the noise is indicated for each of the plurality of equivalent circuits of the CCX gate. The horizontal axis of the graphs 51 to 56 indicates a magnitude of the noise, and the vertical axis indicates the TVD. The noise is, for example, over-rotation noise (over-rotation noise).

The graphs 51 to 56 have values of t/T1 different from each other. In the graphs 51 to 56, a change in an average value of the TVD of the equivalent circuit using the iSWAP gate is indicated by a thin polygonal line, and a change in an average value of the TVD of the equivalent circuit using the CZ gate is indicated by a thick polygonal line.

The graph 51 is an example of a case of "t/T1 = $10^{-5}$". In this case, the equivalent circuit using the iSWAP gate constantly has a smaller value of the TVD than the equivalent circuit using the CZ gate.

The graph 52 is an example of a case of "t/T1 = $5 \times 10^{-5}$". In this case, when the noise is smaller than "0.02", the equivalent circuit using the CZ gate has a smaller value of the TVD than the equivalent circuit using the iSWAP gate. When the noise becomes larger than "0.02", the equivalent circuit using the iSWAP gate has a smaller value of the TVD than the equivalent circuit using the CZ gate.

The graph 53 is an example of a case of "t/T1 = $10^{-4}$". In this case, when the noise is smaller than "0.04", the equivalent circuit using the CZ gate has a smaller value of the TVD than the equivalent circuit using the iSWAP gate. When the noise becomes larger than "0.04", the equivalent circuit using the iSWAP gate has a smaller value of the TVD than the equivalent circuit using the CZ gate.

The graph 54 is an example of a case of "t/T1 = $5 \times 10^{-4}$". In this case, the equivalent circuit using the CZ gate constantly has a smaller value of the TVD than the equivalent circuit using the iSWAP gate.

The graph 55 is an example of a case of "t/T1 = $10^{-3}$". In this case, the equivalent circuit using the CZ gate constantly has a smaller value of the TVD than the equivalent circuit using the iSWAP gate. A difference in the value of the TVD between the equivalent circuit using the CZ gate and the equivalent circuit using the iSWAP gate increases as compared with a case of "t/T1 = $5 \times 10^{-4}$".

The graph 56 is an example of a case of "t/T1 = $5 \times 10^{-3}$". In this case, the equivalent circuit using the CZ gate constantly has a smaller value of the TVD than the equivalent circuit using the iSWAP gate. The difference in the value of the TVD between the equivalent circuit using the CZ gate and the equivalent circuit using the iSWAP gate increases as compared with a case of "t/T1 = $10^{-3}$".

In this way, when the "t/T1" value exceeds "$10^{-4}$", the equivalent circuit using the CZ gate has less influence of the noise. On the other hand, if the "t/T1" value is equal to or less than "$10^{-4}$", the equivalent circuit using the iSWAP gate may have less influence of the noise. In a case where the "t/T1" value is equal to or less than "$10^{-4}$", if the noise is small, the equivalent circuit using the CZ gate has less influence of the noise. However, a difference in the TVD from the equivalent circuit using the iSWAP gate is minute. Therefore, it is appropriate to set the threshold of "t/T1" when the equivalent circuit is determined to "$10^{-4}$". That is, if "t/T1 < $10^{-4}$", the gate conversion unit 150 converts the CCX or CCZ gate into the equivalent circuit using the iSWAP gate. Furthermore, if "t/T1 $\geq 10^{-4}$" the gate conversion unit 150 converts the CCX or CCZ gate into the equivalent circuit using the CZ gate.

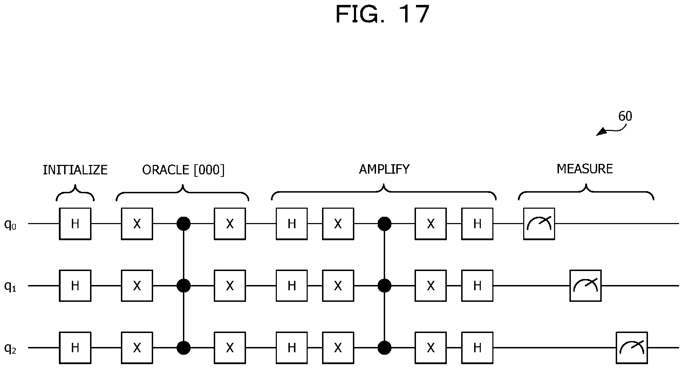

By setting the threshold of t/T1 to an appropriate value, the quantum circuit to be calculated can be optimized to a quantum circuit with reduced influence of the noise and mounted on the qubit control device 200. For example, an implementation method in a case where quantum calculation is performed with the three-qubit Grover's algorithm will be described with reference to FIGs. 17 to 19.

FIG. 17 is a diagram illustrating an example of a quantum circuit of the three-qubit Grover's algorithm. A quantum circuit 60 indicates order of operations on the respective qubits $q_0$, $q_1$, and $q_2$ in a case where the Grover's algorithm to be repeated once is executed with the three qubits.

On each of the qubits $q_0$, $q_1$, and $q_2$, an operation of an H gate is performed as initialization processing. As a result, a superposed state of all states is generated. Next, an operation of an oracle is performed on the qubits $q_0$, $q_1$, and $q_2$. In the oracle, after an operation of an X gate is performed on each of the qubits $q_0$, $q_1$, and $q_2$, a three-qubit CCZ gate operation is performed. Thereafter, the operation of the X gate is performed on each of the qubits $q_0$, $q_1$, and $q_2$ again.

After the operation of the oracle, an amplification operation is performed. In the amplification operation, the operation of the H gate and the operation of the X gate are performed on each of the qubits $q_0$, $q_1$, and $q_2$. Thereafter, the three-qubit CCZ gate operation is performed. Then, the operation of the X gate and the operation of the H gate are performed on each of the qubits $q_0$, $q_1$, and $q_2$.

After the amplification operation, each of the qubits $q_0$, $q_1$, and $q_2$ is measured. By the measurement, each of the qubits $q_0$, $q_1$, and $q_2$ is determined to be in the state of "0" or "1". By observation indicated by the quantum circuit 60, a result of performing inversion amplification processing of the Grover's algorithm once is output.

Note that the quantum computer 300 may include a device that performs a gate operation on two or less qubits, and does not have a device that may perform a gate operation on three or more qubits. Thus, a gate for three qubits such as the CCZ gate is converted into an equivalent circuit obtained by combining gates for two qubits or one qubit. The quantum circuit 60 includes two three-qubit CCZ gates, and these CCZ gates are first converted into the equivalent circuit 35 (refer to FIG. 10).

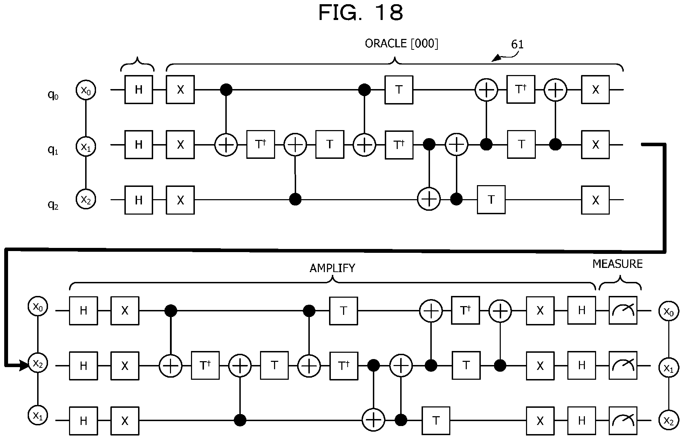

FIG. 18 is a diagram illustrating an example of an equivalent circuit of a quantum circuit of the Grover's algorithm. By converting the CCZ gate of the quantum circuit 60 into the equivalent circuit 35, a quantum circuit 61 including a one-qubit gate and a two-qubit gate is generated. The quantum circuit 61 includes 14 CX gates.

Note that, when the CCZ gate is converted into the equivalent circuit 35, as illustrated in FIGs. 5 and 6, an operation of the SWAP gate is performed on the qubits $q_1$ and $q_2$. Therefore, by converting the CCZ gate into the equivalent circuit 35, actual qubit allocation of a qubit to be subjected to the quantum calculation on the quantum algorithm to each of $x_0$, $x_1$, and $x_2$ changes. However, in the quantum circuit 61, since the conversion of the CCZ gate into the equivalent circuit 35 is performed twice, actual qubit allocation to each of the qubits $x_0$, $x_1$, and $x_2$ to be subjected to the quantum calculation on the quantum algorithm returns to initial allocation at the time of measurement.

The quantum circuit 61 includes 14 CX gates. All of the 14 CX gates are converted into the equivalent circuit using the iSWAP gate or the equivalent circuit using the CZ gate. The threshold of t/T1 used to determine into which equivalent circuit the CX gate is converted is determined based on the change in the TVD according to noise in the Grover's algorithm.

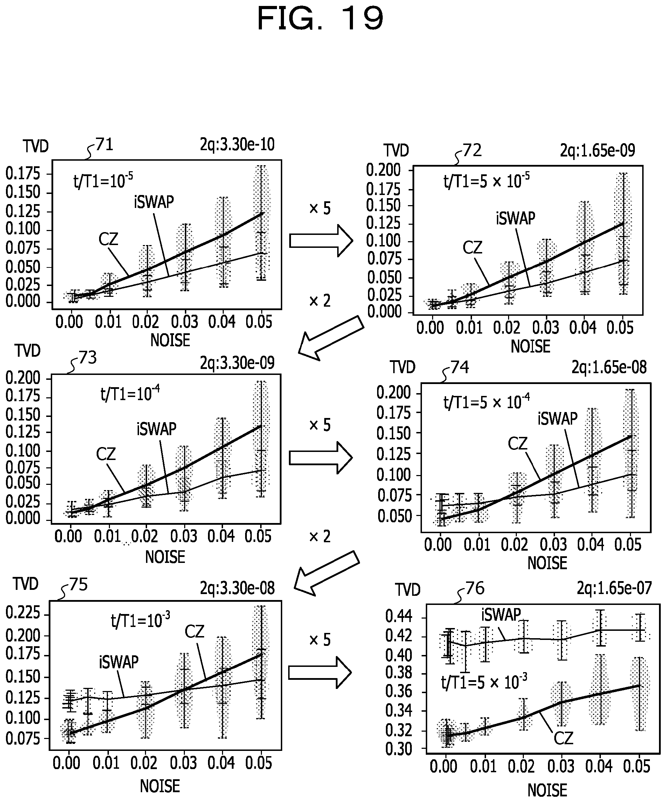

FIG. 19 is a diagram illustrating an example of a change in the TVD for each equivalent circuit according to the noise in the Grover's algorithm. In the example in FIG. 19, a characteristic of the qubit is "T1 = 33 μsec, T2 = 16 μsec". In graphs 71 to 76, the TVD according to the noise is obtained for all the oracles, and a change in an average value of the TVD according to an increase in the noise is indicated for each of the plurality of equivalent circuits of the CCX gate. The horizontal axis of the graphs 71 to 76 indicates a magnitude of the noise, and the vertical axis indicates the TVD.

In the graphs 71 to 76, a change in an average value of the TVD of the equivalent circuit using the iSWAP gate is indicated by a thin polygonal line, and a change in an average value of the TVD of the equivalent circuit using the CZ gate is indicated by a thick polygonal line.

The graph 71 is an example of a case of "t/T1 = $10^{-5}$". In this case, the equivalent circuit using the iSWAP gate constantly has a smaller value of the TVD than the equivalent circuit using the CZ gate.

The graph 72 is an example of a case of "t/T1 = $5 \times 10^{-5}$". In this case, as in a case of "t/T1 = $10^{-5}$" the equivalent circuit using the iSWAP gate constantly has a smaller value of the TVD than the equivalent circuit using the CZ gate.

The graph 73 is an example of a case of "t/T1 = $10^{-4}$". In this case, as in a case of "t/T1 = $5 \times 10^{-5}$", the equivalent circuit using the iSWAP gate constantly has a smaller value of the TVD than the equivalent circuit using the CZ gate.

The graph 74 is an example of a case of "t/T1 = $5 \times 10^{-4}$". When the noise is equal to or less than "0.01", the equivalent circuit using the CZ gate has a smaller value of the TVD than the equivalent circuit using the iSWAP gate. When the noise is equal to or more than "0.02", the equivalent circuit using the iSWAP gate has a smaller value of the TVD than the equivalent circuit using the CZ gate.

A graph 75 is an example of a case of "t/T1 = $10^{-3}$". Before the noise becomes "0.03", the equivalent circuit using the CZ gate has a smaller value of the TVD than the equivalent circuit using the iSWAP gate. When the noise is equal to or more than "0.03", the equivalent circuit using the iSWAP gate has a smaller value of the TVD than the equivalent circuit using the CZ gate.

The graph 76 is an example of a case of "t/T1 = $5 \times 10^{-3}$". In this case, the equivalent circuit using the CZ gate constantly has a smaller value of the TVD than the equivalent circuit using the iSWAP gate.

In this way, when the "t/T1" value exceeds "$10^{-4}$", there is a possibility that the equivalent circuit using the CZ gate has less influence of the noise. On the other hand, if the "t/T1" value is equal to or less than "$10^{-4}$", the equivalent circuit using the iSWAP gate has less influence of the noise. In this case, for example, the threshold of "t/T1" when the equivalent circuit is determined is set to "$10^{-4}$". That is, if "t/T1 < $10^{-4}$", the gate conversion unit 150 converts the CCX or CCZ gate into the equivalent circuit using the iSWAP gate. Furthermore, if "t/T1 ≥ $10^{-4}$" the gate conversion unit 150 converts the CCX or CCZ gate into the equivalent circuit using the CZ gate.

As described above, the control computer 100 converts the CCX gate or the CCZ gate into the equivalent circuit having less influence of the noise, of the equivalent circuit using the iSWAP gate and the equivalent circuit using the CZ gate and mounts the quantum circuit on the qubit control device 200. As a result, it is possible to reduce the influence of the noise and to improve accuracy of the quantum calculation.

Moreover, by using the qubit group with the lowest average value of the fidelity, as the qubit used for the quantum circuit, it is possible to further improve the accuracy of the quantum calculation.

Note that the fidelity and T1 of each qubit are periodically measured. As a result, the qubit to be used can be determined and the quantum circuit can be mounted, based on the fidelity and T1 in the latest state when the quantum calculation is performed, and it is possible to stably perform the quantum calculation with high accuracy. That is, the fidelity or T1 of the qubit is not fixed and changes depending on an environment of the quantum computer 300 or the lapse of time. Therefore, by periodically measuring the fidelity or T1, accuracy of the fidelity or T1 at the time when the quantum calculation is performed is improved.

Moreover, by using the value of t/T1 as the index used to determine the influence of the noise for each equivalent circuit, it is possible to correctly determine the equivalent circuit having less influence of the noise. As a result, the quantum calculation can be performed with less noise, and the accuracy of the quantum calculation is improved.

[Other Examples]

If a quantum gate can be converted into the quantum gate using the CX gate, without limiting to the CCX gate and the CCZ gate, the control computer 100 can convert the quantum gate into an appropriate equivalent circuit based on the relaxation time. Furthermore, the control computer 100 can convert the CX gate included in the quantum circuit acquired from the terminal devices 401, 402,... into the quantum circuit using the iSWAP gate or the equivalent circuit using the CZ gate, based on the relaxation time.

CITATION LIST

PATENT DOCUMENT

> Patent Document 1: U.S. Patent Application Publication No. 2020/0285985
> Patent Document 2: Japanese National Publication of International Patent Application No. 2021-536629
> Patent Document 3: U.S. Patent No. 11112842
> Patent Document 4: Japanese Laid-open Patent Publication No. 2018-5904

REFERENCE SIGNS LIST

> 1, 7quantum circuit
> 1aCCX gate
> 1b, 3aCCZ gate
> 2qubit characteristic information
> 3 to 6, 7a, 7bequivalent circuit
> 4aCX gate
> 5a, 5biSWAP gate
> 6aCZ gate
> 8qubit control device
> 8a, 8b, ...qubit
> 10quantum circuit design device
> 11storage unit
> 12processing unit

**Claims**

1. A quantum circuit design computer program comprising instructions which, when the program is executed by a computer, cause the computer to execute processing comprising:

   detecting a first quantum gate (1a, 1b) of which a gate operation is not performed by a quantum device, from a quantum circuit that indicates a gate operation on a plurality of qubits (8a, 8b) included in the quantum device;
   determining an equivalent circuit to be mounted, from among a plurality of equivalent circuits that implements a gate operation same as the first quantum gate by a second quantum gate of which a gate operation is performed by the quantum device, based on a relaxation time of a qubit to be operated by the detected first quantum gate (1a, 1b); and
   converting the first quantum gate (1a, 1b) in the quantum circuit into the determined equivalent circuit,
   wherein the processing of determining the equivalent circuit determines the equivalent circuit to be mounted, based on a ratio between a gate operation time of a two-qubit gate in the quantum device and a minimum value of the relaxation times of two or more respective qubits to be operated by the first quantum gate,
   wherein the processing of determining the equivalent circuit determines the equivalent circuit to be mounted as a first equivalent circuit by using a CZ gate, when the value of the ratio is equal to or more than a predetermined threshold, and determines the equivalent circuit to be mounted as a second equivalent circuit by using an iSWAP gate, when the value of the ratio is less than the threshold.

2. The quantum circuit design computer program according to claim 1, wherein the first quantum gate (1a, 1b) is a CCX gate or a CCZ gate.

3. The quantum circuit design computer program according to claim 1 or claim 2 causing the computer to execute processing further comprising:
   periodically measuring the relaxation time of each of the plurality of qubits (8a, 8b) included in the quantum device.

4. The quantum circuit design program according to any one of claims 1 to 3, causing the computer to execute processing further comprising:
   determining a qubit to be operated by the quantum circuit, based on a fidelity of the plurality of qubits included in the quantum device.

5. A quantum circuit design method implemented by a computer, the method comprising:

   detecting a first quantum gate (1a, 1b) of which a gate operation is not performed by a quantum device, from a quantum circuit that indicates a gate operation on a plurality of qubits (8a, 8b) included in the quantum device;
   determining an equivalent circuit to be mounted, from among a plurality of equivalent circuits that implements a gate operation same as the first quantum gate (1a, 1b) by a second quantum gate of which a gate operation is performed by the quantum device, based on a relaxation time of a qubit to be operated by the detected first quantum gate (1a, 1b); and
   converting the first quantum gate (1a, 1b) in the quantum circuit into the determined equivalent circuit,
   wherein determining the equivalent circuit comprises determining the equivalent circuit to be mounted, based on a ratio between a gate operation time of a two-qubit gate in the quantum device and a minimum value of the relaxation times of two or more respective qubits to be operated by the first quantum gate,
   wherein determining the equivalent circuit comprises determining the equivalent circuit to be mounted as a first equivalent circuit by using a CZ gate, when the value of the ratio is equal to or more than a predetermined threshold, and determining the equivalent circuit to be mounted as a second equivalent circuit by using an iSWAP gate, when the value of the ratio is less than the threshold.

6. A quantum circuit design apparatus (10) comprising a processing unit configured to perform processing including:

   detecting a first quantum gate of which a gate operation is not performed by a quantum device, from a quantum circuit that indicates a gate operation on a plurality of qubits included in the quantum device;
   determining an equivalent circuit to be mounted, from among a plurality of equivalent circuits that implements a gate operation same as the first quantum gate by a second quantum gate of which a gate operation is performed by the quantum device, based on a relaxation time of a qubit to be operated by the detected first quantum gate; and
   converting the first quantum gate in the quantum circuit into the determined equivalent circuit,
   wherein the processing of determining the equivalent circuit determines the equivalent circuit to be mounted, based on a ratio between a gate operation time of a two-qubit gate in the quantum device and a minimum value of the relaxation times of two or more respective qubits to be operated by the first quantum gate,
   wherein the processing of determining the equivalent circuit determines the equivalent circuit to be mounted as a first equivalent circuit by using a CZ gate, when the value of the ratio is equal to or more than a predetermined threshold, and determines the equivalent circuit to be mounted as a second equivalent circuit by using an iSWAP gate, when the value of the ratio is less than the threshold.

**Patentansprüche**

1. Quantenschaltungsentwurfscomputerprogramm, umfassend Anweisungen, die, wenn das Programm durch einen Computer ausgeführt wird, den Computer dazu veranlassen, ein Verarbeiten auszuführen, umfassend:

   Erkennen eines ersten Quantengatters (1a, 1b), von dem eine Gatteroperation nicht durch eine Quantenvorrichtung durchgeführt wird, aus einer Quantenschaltung, die eine Gatteroperation auf einer Vielzahl von Qubits (8a, 8b) anzeigt, die in der Quantenvorrichtung eingeschlossen sind;
   Bestimmen einer zu montierenden Ersatzschaltung aus einer Vielzahl von Ersatzschaltungen, die eine Gatteroperation gleich der des ersten Quantengatters implementiert, durch ein zweites Quantengatter, von dem eine Gatteroperation durch die Quantenvorrichtung basierend auf einer Relaxationszeit eines durch das erkannte erste Quantengatter (1a, 1b) zu betreibenden Qubits durchgeführt wird; und

Umwandeln des ersten Quantengatters (1a, 1b) in der Quantenschaltung in die bestimmte Ersatzschaltung, wobei das Verarbeitung des Bestimmens der Ersatzschaltung die zu montierende Ersatzschaltung basierend auf einem Verhältnis zwischen einer Gatteroperationszeit eines Zwei-Qubit-Gatters in der Quantenvorrichtung und einem Minimalwert der Relaxationszeiten von zwei oder mehr entsprechenden Qubits bestimmt, die durch das erste Quantengatter betrieben werden soll,

wobei das Verarbeiten des Bestimmens der Ersatzschaltung die zu montierende Ersatzschaltung als eine erste Ersatzschaltung mittels eines CZ-Gatters bestimmt, wenn der Wert des Verhältnisses gleich oder größer als ein vorbestimmter Schwellenwert ist, und die zu montierende Ersatzschaltung als eine zweite Ersatzschaltung mittels eines iSWAP-Gatters bestimmt, wenn der Wert des Verhältnisses kleiner als der Schwellenwert ist.

2. Quantenschaltungsentwurfscomputerprogramm nach Anspruch 1, wobei
das erste Quantengatter (1a, 1b) ein CCX-Gatter oder ein CCZ-Gatter ist.

3. Quantenschaltungsentwurfscomputerprogramm nach Anspruch 1 oder Anspruch 2, das den Computer dazu veranlasst, das Verarbeiten auszuführen, ferner umfassend:
periodisches Messen der Relaxationszeit jedes der Vielzahl von Qubits (8a, 8b), die in der Quantenvorrichtung eingeschlossen sind.

4. Quantenschaltungsentwurfsprogramm nach einem der Ansprüche 1 bis 3, das den Computer dazu veranlasst, das Verarbeiten auszuführen, ferner umfassend:
Bestimmen eines Qubits, das durch die Quantenschaltung betrieben werden soll, basierend auf einer Genauigkeit der Vielzahl von Qubits, die in der Quantenvorrichtung eingeschlossen sind.

5. Quantenschaltungsentwurfsverfahren, das durch einen Computer implementiert wird, das Verfahren umfassend:

Erkennen eines ersten Quantengatters (1a, 1b), von dem eine Gatteroperation nicht durch eine Quantenvorrichtung durchgeführt wird, aus einer Quantenschaltung, die eine Gatteroperation auf einer Vielzahl von Qubits (8a, 8b) anzeigt, die in der Quantenvorrichtung eingeschlossen sind;

Bestimmen einer zu montierenden Ersatzschaltung aus einer Vielzahl von Ersatzschaltungen, die eine Gatteroperation gleich der des ersten Quantengatters (1a, 1b) implementiert, durch ein zweites Quantengatter, von dem eine Gatteroperation durch die Quantenvorrichtung basierend auf einer Relaxationszeit eines durch das erkannte erste Quantengatter (1a, 1b) zu betreibenden Qubits durchgeführt wird; und

Umwandeln des ersten Quantengatters (1a, 1b) in der Quantenschaltung in die bestimmte Ersatzschaltung, wobei das Bestimmen der Ersatzschaltung das Bestimmen der zu montierenden Ersatzschaltung basierend auf einem Verhältnis zwischen einer Gatteroperationszeit eines Zwei-Qubit-Gatters in der Quantenvorrichtung und einem Minimalwert der Relaxationszeiten von zwei oder mehr entsprechenden Qubits, die durch das erste Quantengatter betrieben werden sollen, umfasst, wobei das Bestimmen der Ersatzschaltung das Bestimmen der zu montierenden Ersatzschaltung als eine erste Ersatzschaltung mittels eines CZ-Gatters, wenn der Wert des Verhältnisses gleich oder größer als ein vorbestimmter Schwellenwert ist, und Bestimmen der zu montierenden Ersatzschaltung als eine zweite Ersatzschaltung mittels eines iSWAP-Gatters, wenn der Wert des Verhältnisses kleiner als der Schwellenwert ist, umfasst.

6. Quantenschaltungsentwurfseinrichtung (10), umfassend eine Verarbeitungseinheit, die dazu konfiguriert ist, ein Verarbeiten einschließlich Folgendem auszuführen:

Erkennen eines ersten Quantengatters, von dem eine Gatteroperation nicht durch eine Quantenvorrichtung durchgeführt wird, aus einer Quantenschaltung, die eine Gatteroperation auf einer Vielzahl von Qubits anzeigt, die in der Quantenvorrichtung eingeschlossen sind;

Bestimmen einer zu montierenden Ersatzschaltung aus einer Vielzahl von Ersatzschaltungen, die eine Gatteroperation gleich der des ersten Quantengatters implementiert, durch ein zweites Quantengatter, von dem eine Gatteroperation durch die Quantenvorrichtung basierend auf einer Relaxationszeit eines durch das erkannte erste Quantengatter zu betreibenden Qubits durchgeführt wird; und

Umwandeln des ersten Quantengatters in der Quantenschaltung in die bestimmte Ersatzschaltung, wobei das Verarbeitung des Bestimmens der Ersatzschaltung die zu montierende Ersatzschaltung basierend auf einem Verhältnis zwischen einer Gatteroperationszeit eines Zwei-Qubit-Gatters in der Quantenvorrichtung und einem Minimalwert der Relaxationszeiten von zwei oder mehr entsprechenden Qubits bestimmt, die durch das erste Quantengatter betrieben werden soll,

wobei das Verarbeiten des Bestimmens der Ersatzschaltung die zu montierende Ersatzschaltung als eine erste Ersatzschaltung mittels eines CZ-Gatters bestimmt, wenn der Wert des Verhältnisses gleich oder größer als ein vorbestimmter Schwellenwert ist, und die zu montierende Ersatzschaltung als eine zweite Ersatzschaltung mittels eines iSWAP-Gatters bestimmt, wenn der Wert des Verhältnisses kleiner als der Schwellenwert ist.

**Revendications**

1. Programme informatique de conception de circuit quantique comprenant des instructions qui, lorsque le programme est exécuté par un ordinateur, amènent l'ordinateur à exécuter un traitement comprenant :

   la détection d'une première porte quantique (1a, 1b) dont une opération de porte n'est pas réalisée par un dispositif quantique, à partir d'un circuit quantique qui indique une opération de porte sur une pluralité de qubits (8a, 8b) inclus dans le dispositif quantique ;
   la détermination d'un circuit équivalent à monter, parmi une pluralité de circuits équivalents, qui met en œuvre une opération de porte identique à celle de la première porte quantique par une seconde porte quantique dont une opération de porte est réalisée par le dispositif quantique, sur la base d'un temps de relaxation d'un qubit à actionner par la première porte quantique (1a, 1b) détectée ; et
   la conversion de la première porte quantique (1a, 1b) dans le circuit quantique en circuit équivalent déterminé, dans lequel le traitement de détermination du circuit équivalent détermine le circuit équivalent à monter, sur la base d'un rapport entre un temps d'opération de porte d'une porte à deux qubits dans le dispositif quantique et une valeur minimale des temps de relaxation de deux ou plusieurs qubits respectifs à actionner par la première porte quantique,
   dans lequel le traitement de détermination du circuit équivalent détermine le circuit équivalent à monter comme premier circuit équivalent à l'aide d'une porte CZ, lorsque la valeur du rapport est égale ou supérieure à un seuil prédéterminé, et détermine le circuit équivalent à monter comme second circuit équivalent à l'aide d'une porte iSWAP, lorsque la valeur du rapport est inférieure au seuil.

2. Programme informatique de conception de circuit quantique selon la revendication 1, dans lequel la première porte quantique (1a, 1b) est une porte CCX ou une porte CCZ.

3. Programme informatique de conception de circuit quantique selon la revendication 1 ou la revendication 2, amenant l'ordinateur à exécuter un traitement comprenant en outre :
   la mesure de manière périodique du temps de relaxation de chacun de la pluralité de qubits (8a, 8b) inclus dans le dispositif quantique.

4. Programme de conception de circuit quantique selon l'une quelconque des revendications 1 à 3, amenant l'ordinateur à exécuter un traitement comprenant en outre :
   la détermination d'un qubit à actionner par le circuit quantique, sur la base d'une fidélité de la pluralité de qubits inclus dans le dispositif quantique.

5. Procédé de conception de circuit quantique mis en œuvre par un ordinateur, le procédé comprenant :

   la détection d'une première porte quantique (1a, 1b) dont une opération de porte n'est pas réalisée par un dispositif quantique, à partir d'un circuit quantique qui indique une opération de porte sur une pluralité de qubits (8a, 8b) inclus dans le dispositif quantique ;
   la détermination d'un circuit équivalent à monter, parmi une pluralité de circuits équivalents, qui met en œuvre une opération de porte identique à celle de la première porte quantique (1a, 1b) par une seconde porte quantique dont une opération de porte est réalisée par le dispositif quantique, sur la base d'un temps de relaxation d'un qubit à actionner par la première porte quantique (1a, 1b) détectée ; et
   la conversion de la première porte quantique (1a, 1b) dans le circuit quantique en circuit équivalent déterminé, dans lequel la détermination du circuit équivalent comprend la détermination du circuit équivalent à monter, sur la base d'un rapport entre un temps d'opération de porte d'une porte à deux qubits dans le dispositif quantique et une valeur minimale des temps de relaxation de deux ou plusieurs qubits respectifs à actionner par la première porte quantique,
   dans lequel la détermination du circuit équivalent comprend la détermination du circuit équivalent à monter comme premier circuit équivalent à l'aide d'une porte CZ, lorsque la valeur du rapport est égale ou supérieure à un seuil prédéterminé, et la détermination du circuit équivalent à monter comme second circuit équivalent à l'aide d'une porte iSWAP, lorsque la valeur du rapport est inférieure au seuil.

6. Appareil de conception de circuit quantique (10) comprenant une unité de traitement configurée pour réaliser un traitement comportant :

la détection d'une première porte quantique dont une opération de porte n'est pas réalisée par un dispositif quantique, à partir d'un circuit quantique qui indique une opération de porte sur une pluralité de qubits inclus dans le dispositif quantique ;

la détermination d'un circuit équivalent à monter, parmi une pluralité de circuits équivalents, qui met en œuvre une opération de porte identique à celle de la première porte quantique par une seconde porte quantique dont une opération de porte est réalisée par le dispositif quantique, sur la base d'un temps de relaxation d'un qubit à actionner par la première porte quantique détectée ; et

la conversion de la première porte quantique dans le circuit quantique en circuit équivalent déterminé,

dans lequel le traitement de détermination du circuit équivalent détermine le circuit équivalent à monter, sur la base d'un rapport entre un temps d'opération de porte d'une porte à deux qubits dans le dispositif quantique et une valeur minimale des temps de relaxation de deux ou plusieurs qubits respectifs à actionner par la première porte quantique,

dans lequel le traitement de détermination du circuit équivalent détermine le circuit équivalent à monter comme premier circuit équivalent à l'aide d'une porte CZ, lorsque la valeur du rapport est égale ou supérieure à un seuil prédéterminé, et détermine le circuit équivalent à monter comme second circuit équivalent à l'aide d'une porte iSWAP, lorsque la valeur du rapport est inférieure au seuil.

# FIG. 1

# FIG. 2

# FIG. 3

# FIG. 4

CCX GATE

# FIG. 5

CCZ GATE

# FIG. 6

# FIG. 7

# FIG. 8

# FIG. 9

100

## CONTROL COMPUTER

STORAGE UNIT — 110

111
CONVERSION INFORMATION

112
CONNECTION TOPOLOGY INFORMATION

113
QUBIT CHARACTERISTIC INFORMATION

130
QUBIT CHARACTERISTICS MEASUREMENT UNIT

140
QUBIT ALLOCATION UNIT

150
GATE CONVERSION UNIT

120
QUANTUM CALCULATION CONTROL UNIT

200
QUBIT CONTROL DEVICE

# FIG. 10

# FIG. 11

112

| COUPLING QUBIT PAIR |
|:---:|
| $q_0 - q_1$ |
| $q_1 - q_2$ |
| ... |

# FIG. 12

113

| QUBIT | FIDELITY | T1 |
|---|---|---|
| $q_0$ | $F_0$ | $t_0$ |
| $q_1$ | $F_1$ | $t_1$ |
| ... | ... | ... |

# FIG. 13

# FIG. 14

CCX GATE

31a

(SEVEN CZ GATES)

t / T1 < THRESHOLD?

NO

YES

(14 iSWAP GATES)

# FIG. 15

START

S201

ACQUIRE QUANTUM CIRCUIT

S202

GENERATE CANDIDATE QUBIT GROUP THAT CAN BE CONTINUOUSLY ARRANGED

S203

CALCULATE AVERAGE FIDELITY OF CANDIDATE QUBIT GROUP

S204

DETERMINE CANDIDATE QUBIT GROUP WITH HIGHEST AVERAGE FIDELITY AS ALLOCATION DETERMINATION

S205

DETECT THREE QUBITS TO BE SUBJECTED TO CCX OR CCZ GATE OPERATION

S206

DETECT? —— NO

YES

S207

ACQUIRE MINIMUM VALUE OF T1 VALUE OF THREE QUBITS

S208

t / T1 < THRESHOLD? —— NO

YES

S210

CONVERT INTO EQUIVALENT CIRCUIT USING CZ GATE

S209

CONVERT INTO EQUIVALENT CIRCUIT USING iSWAP GATE

S211

CONTROL QUBIT CONTROL DEVICE IN ACCORDANCE WITH QUANTUM CIRCUIT AFTER CONVERSION

END

EP 4 550 222 B1

# FIG. 16

34

FIG. 17

# FIG. 18

ORACLE [000]

61

AMPLIFY

MEASURE

# FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200285985
- JP 2021536629 A
- US 11112842 B
- JP 2018005904 A

**Non-patent literature cited in the description**

- **THOMAS J MALDONADO et al.** Error rate reduction of single-qubit gates via noise-aware decomposition into native gates. *ARXIV.ORG*, 05 May 2022